# NEUE EUROPÄISCHE PATENTSCHRIFT

(11) **EP 3 546 116 B2**
(45) Veröffentlichungstag und Bekanntmachung des Hinweises auf die Entscheidung über den Einspruch: **06.12.2023**
(45) Hinweis auf die Patenterteilung: 14.10.2020
(21) Anmeldenummer: 19163024.3
(22) Anmeldetag: 15.03.2019
(51) Int. Cl.: B23P 19/06, B25J 11/00, B25B 29/02, E04H 12/08, F16B 31/04, F03D 13/20, F03D 13/10

(54) **VORRICHTUNG ZUM ANZIEHEN VON SCHRAUBVERBINDUNGEN**
DEVICE FOR TIGHTENING SCREW JOINTS
DISPOSITIF DE SERRAGE DE RACCORDS VISSÉS

(30) Priorität: 29.03.2018 DE 102018107657
(43) Veröffentlichungstag der Anmeldung: 02.10.2019
(73) Patentinhaber: Hohmann, Jörg, 59872 Meschede (DE); Hohmann, Frank, 59581 Warstein (DE)
(72) Erfinder:
(74) Vertreter: Janke Scholl Patentanwälte PartG mbB

(56) Entgegenhaltungen:
- EP-A1- 2 607 685
- EP-A1- 3 195 991
- WO-A1-95/33598
- WO-A1-2016/193297
- KR-A- 20130 025 592
- KR-A- 20130 026 039

## Beschreibung

Die Erfindung betrifft eine Vorrichtung zum Anziehen von Schraubverbindungen, die entlang einer einen Raum und vorzugsweise das Innere des Turms einer Windkraftanlage in Ringform umgebenden Flanschverbindung angeordnet sind und von denen sich jede Schraubverbindung aus einem Gewindeelement und einer darauf aufgeschraubten Mutter zusammensetzt, und die Mutter gegen die erste Seite, und das Gewindeelement gegen die zweite Seite der Flanschverbindung abgestützt ist, wobei die Vorrichtung aufweist
- einen mittels eines Fahrantriebs entlang der Flanschverbindung fahrbaren, mit einem vorzugsweise elektrischen Fahrantrieb versehenen Werkzeugträger,
- ein an dem Werkzeugträger angeordnetes Werkzeug zum Anziehen der Schraubverbindung und Drehen der Mutter relativ zu der Flanschverbindung,
- eine Steuereinheit welche dazu ausgebildet ist, über Fahrantrieb-Steuersignale den Werkzeugträger bis in eine Arbeitsposition zu fahren, in der das Werkzeug der jeweils anzuziehenden Schraubverbindung gegenüberliegt, und über Werkzeug-Steuersignale das Anziehen der Schraubverbindung und Drehen der Mutter zu kontrollieren.

Eine Vorrichtung mit diesen Merkmalen ist aus der EP 3 195 991 A1 bekannt. Sie dient dazu, in einer Reihe entlang eines Flansches angeordnete Schraubverbindungen nacheinander festzuziehen. Jede einzelne Schraubverbindung setzt sich zusammen aus einem Gewindeelement in Gestalt eines Schraubbolzens, der sich mit seinem radial erweiterten Bolzenkopf von unten gegen den Flansch abstützt, und aus einer auf den Gewindeabschnitt des Schraubbolzens geschraubten Gewindemutter, wobei sich die Mutter von oben an dem Flansch abstützt. Das Anziehen bzw. Nachziehen der Schraubverbindung erfolgt, indem die Mutter längs des Gewindes nachgestellt wird. Dies erfolgt unter Verwendung eines auf einem selbstfahrenden Fahrzeug angeordneten Werkzeugs. Mittels eines Positionssensors und der durch diesen Sensor erfassten Positionssignale wird das Fahrzeug mit dem darauf angeordneten Werkzeug kontrolliert gefahren, bis sich aus den Sensorsignalen ergibt, dass sich das Werkzeug exakt in einer axialen Ausrichtung zur Verschraubungsachse des Schraubbolzens und der Gewindemutter befindet. Hierzu werden die Positionssignale des Positionssensors steuerungstechnisch zu Signalen für den Antrieb des Fahrzeugs verarbeitet. Die Steuerung ist außerdem dazu ausgebildet, den Anziehvorgang zu steuern.

Die KR 10-2013-0026039 A offenbart einen autonomen Roboter, der ausgelegt ist für das An-, bzw. Nachziehen von Schraubverbindungen an Flanschen von Turmsegmenten einer Windkraftanlage. Der Roboter wird an einem Seil im Turminneren auf Höhe der Flanschverbindung herabgelassen. Dort wird er an den Flansch herangefahren und durch eine obere und untere Flanschklammer an den stirnseitig voneinander abgewandt liegenden Seiten der Flansche beider Turmsegmente verspannt. Für die Fortbewegung entlang des Flanschringes ist ein Raupenantrieb vorhanden. Diese Schrift offenbart die Merkmale der Oberbegriffe der unabhängigen Ansprüche 1, 17 und 21.

Weiter offenbart die WO 95/33598 A1 einen Schraubenspannzylinder, wobei der Schraubenspannzylinder durch seine Bauform ein Durchrutschen beim Anziehen der Schraubverbindung vermeidet. Ferner handelt es sich um eine ferngesteuerte Vorrichtung.

Auch die WO 2016/193297 A1 schlägt einen autonomen Roboter für Montage und Wartung von Schraubverbindungen innerhalb eines Turms vor. Der Roboter wird über eine im Zentrum des Turms befindliche Verfahreinrichtung an die Flanschverbindung herangefahren. Der Roboter besteht aus drei Armen, wobei ein Arm davon für den Vortrieb an der Flanschverbindung zuständig ist. Die anderen beiden Roboterarme führen die Verschraubung durch.

Von Nachteil bei dem bekannten, die einzelnen Schraubverbindungen nacheinander anziehenden Spann- bzw. Nachspannprozessen ist, dass es an einfachen Maßnahmen für den Fall eines ungewollten Durchdrehens des Gewindeelements während des Nachstellens der Mutter fehlt. Für dieses Problem soll eine Lösung bereitgestellt werden.

Diese Lösung besteht bei einer ersten Ausführungsform in einer Vorrichtung zum Anziehen von Schraubverbindungen mit den Merkmalen des Patentanspruchs 1.

Bei der ersten Ausführungsform wird für das Anziehen von solchen Schraubverbindungen, deren Gewindeelement auf der zweiten Seite der Flanschverbindung mit mindestens einer flachen Schlüsselfläche versehen ist, vorgeschlagen, dass die Gegenhaltefläche zur flächigen Anlage gegen die mindestens eine Schlüsselfläche ausgebildet ist.

Das Haltewerkzeug umfasst einen mit dem Antrieb antriebsseitig verbundenen Werkzeuggrundkörper und einen die mindestens eine Gegenhaltefläche aufweisenden Werkzeugabschnitt. Der Werkzeuggrundkörper erstreckt sich relativ weit nach unten. Ist der Werkzeugträger zu seiner Verfahrbarkeit mit drehbar gelagerten Laufrollen versehen, welche die Aufstandsebene des Werkzeugträgers definieren, so ist der Antrieb für das Haltewerkzeug oberhalb dieser Aufstandsebene angeordnet, und der Werkzeuggrundkörper des Haltewerkzeugs erstreckt sich über die Aufstandsebene hinweg bis hinab zu dem Werkzeugabschnitt.

Der Werkzeugabschnitt ist entgegen der Kraft einer Feder beweglich an dem Werkzeuggrundkörper geführt, wobei die Bewegungsrichtung gleich ist der Richtung des Vor- und Zurückbewegens des Haltewerkzeugs.

Für einen verbesserten Formschluss gegenüber Schlüsselflächen des Gewindeelements wird vorgeschlagen, dass das Haltewerkzeug zwei einander zugewandte und zueinander parallele Gegenhalteflächen aufweist, um so einen Vier- oder Sechskant, mit dem das Gewindeelement versehen ist, gegen ein Mitdrehen zu sichern. Die Gegenhalteflächen sind z.B. die Werkzeugflächen eines Maulschlüssels.

In einer alternativen Gestaltung kann das Haltewerkzeug zwei einander abgewandte, vorzugsweise zueinander parallele Gegenhalteflächen aufweisen, um mit diesen beiden Flächen in den Abstand zwischen zwei benachbarten Vier- oder Sechskanten, welche sich an radial erweiterten Abschnitte zweier benachbarter Gewindeelemente befinden, einfahren zu können und so diese Gewindeelemente gegen ein Mitdrehen zu blockieren.

Vorzugsweise und da dies die gerätetechnisch am einfachsten zu realisierende Variante ist, erfolgt der Antrieb des Haltewerkzeugs quer zur Längsachse der Schraubverbindung.

Jedoch kann der Antrieb auch so gestaltet sein, dass das Haltewerkzeug eine Vertikalbewegung durchführt.

Vorzugsweise befindet sich der Werkzeugabschnitt in der Ruheposition des Haltewerkzeugs in einer Stellung an dem Werkzeuggrundkörper, in der sich ein Anschlag an dem Werkzeugabschnitt unter der Kraft der Feder gegen einen Anschlag an dem Werkzeuggrundkörper abstützt.

Vorzugsweise sind der Fahrantrieb des Werkzeugträgers und der Antrieb des Haltewerkzeugs jeweils eigenständig, wobei sie aber beide durch Signale derselben Steuereinheit kontrolliert werden.

Ferner vorgeschlagen wird ein räumlich getrennt von dem Werkzeugträger platzierbares Energiemodul zur Energieversorgung des Fahrantriebs, des Werkzeugs und des Haltewerkzeugs, wobei eine zumindest auf einer Teillänge flexible Energieversorgungsleitung von dem Energiemodul zu dem Werkzeugträger führt. In diesem Fall ist auch die Steuereinheit vorzugsweise an dem Energiemodul angeordnet oder mit diesem gemeinsam auf einem Träger angeordnet.

Zur Übertragung der Fahrantrieb-Steuersignale, der Werkzeug-Steuersignale und der Haltewerkzeug-Steuersignale kann eine elektrische Signalleitung von der Steuereinheit zu dem Werkzeugträger führen. Die Signalleitung ist zumindest auf einer Teillänge mit der Energieversorgungsleitung mechanisch verbunden.

Das in der Vorrichtung verwendete Werkzeug kann ein Schraubenspannzylinder sein oder ein hydraulischer Drehmomentschrauber oder ein elektrischer Drehschrauber.

Besonders vorteilhaft kann ein weitgehend torsionsfrei arbeitendes Arbeitsverfahren zum Anziehen der Schraubverbindungen sein. Ein solches Anziehen ermöglicht zum Beispiel ein Werkzeug in der Bauart eines Schraubenspannzylinders. Solche Schraubenspannzylinder sind bekannt. Sie arbeiten üblicherweise mit Hydraulikkraft, sind mit einem einen hydraulischen Arbeitsraum umgebenden Zylindergehäuse versehen sowie einer in dem Zylindergehäuse drehbar angeordneten Wechselbuchse, welche mit einem Gewindeendabschnitt der Schraubverbindung verschraubbar ist. Bestandteil eines solchen Schraubenspannzylinders ist ferner eine Drehhülse zum formschlüssigen Mitnehmen, d.h. Drehen der Mutter, während das Gewindeelement der Schraubverbindung durch den Hydraulikdruck leicht gedehnt ist.

Bei Verwendung eines Schraubenspannzylinders als Werkzeug ist dieser mit einem elektrischen Antrieb für das Drehen der Wechselbuchse versehen. Außerdem kann der Schraubenspannzylinder mit einem zweiten elektrischen Antrieb versehen sein. Dieser ist für das Drehen der Drehhülse und damit das Anlegen der Mutter verantwortlich, und ist zusätzlich auch für ein vertikales Einstellen des Schraubenspannzylinders relativ zu dem Werkzeugträger ausgebildet.

Die wegen der vielen Verschraubungen und hohen Drücke von bis zu 3000 bar schweren Nebenaggregate der Vorrichtung und insbesondere das Energiemodul sind nicht auf dem Werkzeugträger angeordnet, sondern räumlich getrennt. So kann das Energiemodul zuverlässig die Energieversorgung von Fahrantrieb, Werkzeug und Haltewerkzeug, sicherstellen, wobei eine zumindest auf einer Teillänge flexible Energieversorgungsleitung von dem Energiemodul zu dem Werkzeugträger führt. Gemäß einer weiteren Ausgestaltung der Vorrichtung ist auch die Steuereinheit an dem Energiemodul angeordnet und zum Beispiel mit diesem gemeinsam auf einem Träger angeordnet.

Zur Übertragung der Fahrantrieb-Steuersignale, der Werkzeug-Steuersignale und der Haltewerkzeug-Steuersignale kann eine elektrische Signalleitung von der Steuereinheit zu dem Werkzeugträger führen, wobei die Signalleitung zumindest auf einer Teillänge mit der Energieversorgungsleitung mechanisch verbunden sein kann.

Die Vorrichtung kann ferner ein schwenkbewegliches Gestell mit einer oder mehreren senkrechten Schwenkachsen aufweisen. Das Gestell ist zu seiner eigenen ortsfesten Befestigung mit Befestigungsmitteln versehen. Ein Längsabschnitt der Energieversorgungsleitung ist in das Gestell eingehängt. Vorzugsweise ist das schwenkbewegliche Gestell ausgebildet, die Energieversorgungsleitung über einen Drehwinkel von mindestens annähernd 360° zu stützen.

Ferner vorgeschlagen wird ein mit der Steuereinheit vorzugsweise in einem gemeinsamen Gehäuse zusammengefasstes Dokumentationsmodul. In diesem wird für jede angezogene Schraubverbindung ein Datensatz abgespeichert. Der Datensatz umfasst
die individuelle Kennung der jeweiligen Schraubverbindung, wobei diese Kennung z. B. durch ein Barcode-Scannen oder einen RFID Tag an der jeweiligen Schraubverbindung erfasst wird, oder die Kennung alternativ durch die Position der jeweiligen Schraubverbindung an der Flanschverbindung bestimmt wird,
und/oder die tatsächlich verwendete Anzugskraft des Werkzeugs,
und/oder den zurückgelegten Drehwinkel der Mutter relativ zu der Flanschverbindung,
und/oder die gemessene Längenänderung des Gewindeelements während des Anziehvorgangs.

Ferner vorgeschlagen wird ein schwenkbewegliches Gestell mit einer oder mehreren senkrechten Schwenkachsen, wobei das Gestell zu seiner Befestigung mit Befestigungsmitteln versehen ist, und ein Längsabschnitt der Energieversorgungsleitung in das Gestell eingehängt ist.

Vorzugsweise ist das schwenkbewegliche Gestell ausgebildet, die Energieversorgungsleitung über einen Drehwinkel von annähernd 360° zu stützen.

Vorzugsweise weist der Werkzeugträger eine Hindurchführung für die Energieversorgungsleitung auf, wobei sich die Hindurchführung an einem Schieber befindet, welcher beweglich an dem Werkzeugträger angeordnet ist, vorzugsweise in Fahrtrichtung des Werkzeugträgers beweglich.

Bei einer in Patentanspruch 17 angegebenen, zweiten Ausführungsform der Vorrichtung zum Anziehen von Schraubverbindungen erfolgt das Gegenhalten unmittelbar durch ein Abstützen an einem Gewindeabschnitt des Gewindeelements. Hierzu wird vorgeschlagen, dass das Haltewerkzeug zwei unter starker Druckausübung aufeinander zu bewegliche Gegenhalteflächen aufweist, und dass die Gegenhalteflächen jeweils als Schalen gestaltet sind, deren Radius im Wesentlichen gleich ist dem Radius eines Gewindeabschnitts des Gewindeelements.

Wegen der bei dieser Ausgestaltung hohen Druckkräfte sind Maßnahmen zur Reibungserhöhung sinnvoll. Daher wird vorgeschlagen, dass die Gegenhalteflächen zur Erhöhung ihres Reibungswiderstandes gegenüber dem Gewindeabschnitt mit einem Reibbelag aus z.B. Gummi oder mit einer nichtglatten Oberfläche versehen sind.

Gemäß einer weiteren Ausgestaltung sind das Haltewerkzeug und das Werkzeug miteinander kombiniert. Dabei erstreckt sich das Haltewerkzeug durch mindestens eine Öffnung in dem Werkzeug, wobei sich die Gegenhalteflächen des Haltewerkzeugs innerhalb des Werkzeugs befinden. Vorzugsweise ist Bestandteil des Werkzeugs ein Stützrohr, mit dessen Unterseite sich das Werkzeug auf der Flanschverbindung abzustützen vermag. Die mindestens eine Öffnung, durch welche sich das Haltewerkzeug erstreckt, reicht in diesem Fall durchgehend bis zu der Unterseite des Stützrohrs.

Bei einer alternativen Lösung gemäß Patentanspruch 21 ist das Werkzeug ein hydraulischer Schraubenspannzylinder, mit einem einen hydraulischen Arbeitsraum umgebenden Zylindergehäuse, einer in dem Zylindergehäuse drehbar angeordneten und mit einem Innengewinde auf das Gewindeelement aufschraubbaren Wechselbuche, einem Antrieb zum Drehen der Wechselbuchse, und einem gegen eine an dem Gewindeelement vorhandene Schlüsselfläche abstützbaren Haltewerkzeug, wobei das Haltewerkzeug drehfest gegenüber dem Zylindergehäuse ist.

Weitere Einzelheiten und Vorteile ergeben sich aus der nachfolgenden Beschreibung eines auf der Zeichnung dargestellten Ausführungsbeispiels. Darin zeigen:
- Figur 1:: ein perspektivischer Blick in zwei miteinander verbundene, ringförmige Abschnitte des Turms einer Windkraftanlage, wobei die Abschnitte nur als Hälfte auf jener Länge des Turms wiedergegeben sind, auf dem sie über eine ringförmige Flanschverbindung mit einer Vielzahl von Schraubverbindungen verbunden sind;
- Figur 2:: einen horizontalen Schnitt, hier mit Darstellung des vollen Umfangs der ringförmigen Turmabschnitte;

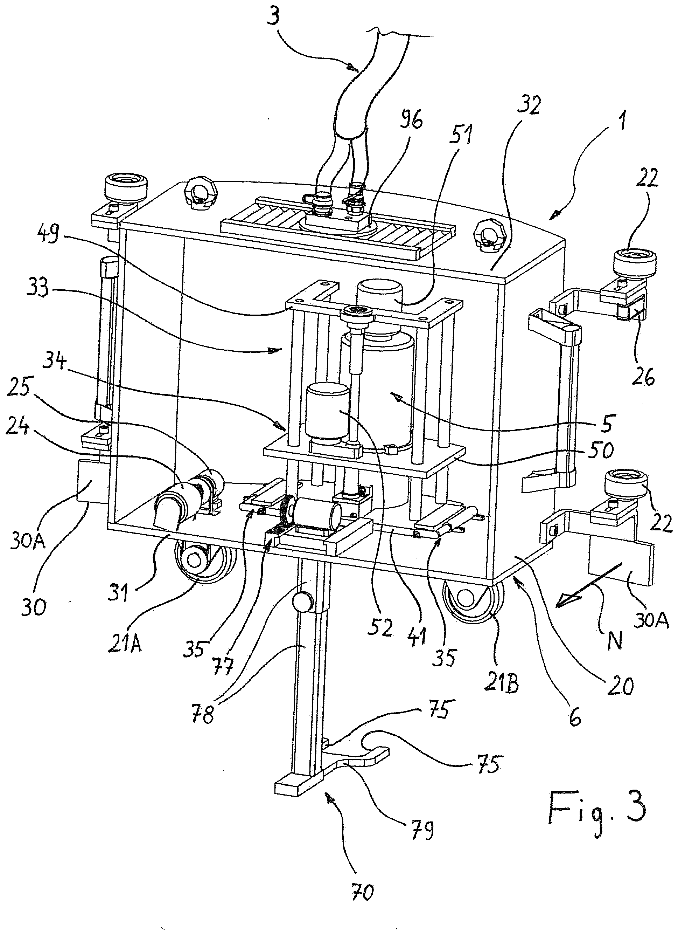

- Figur 3:: eine als Wagen ausgebildete verfahrbare Einheit der Vorrichtung zum Anziehen von Schraubverbindungen in perspektivischer Darstellung;

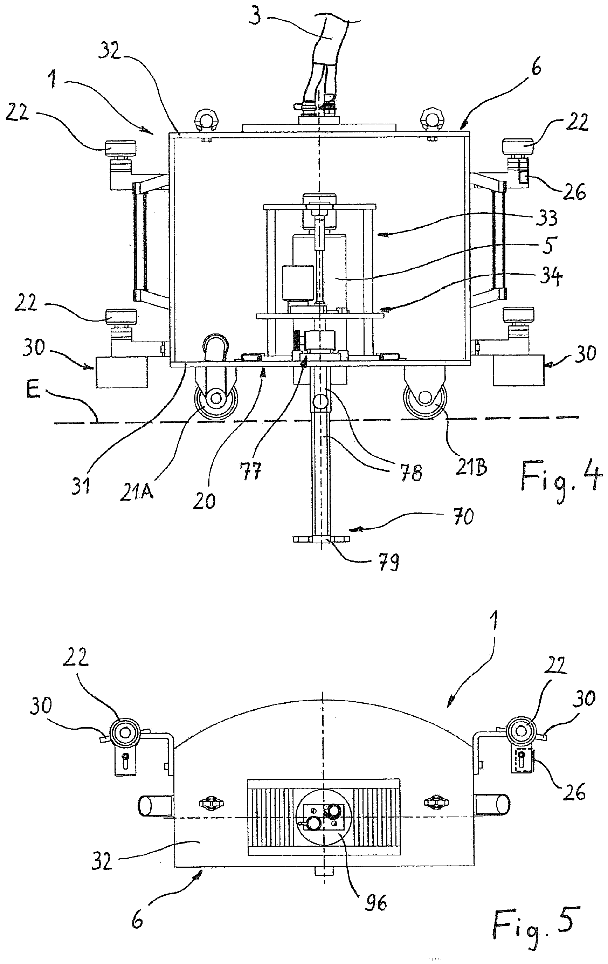

- Figur 4:: die verfahrbare Einheit in einer Ansicht;
- Figur 5:: die verfahrbare Einheit in einer Draufsicht;

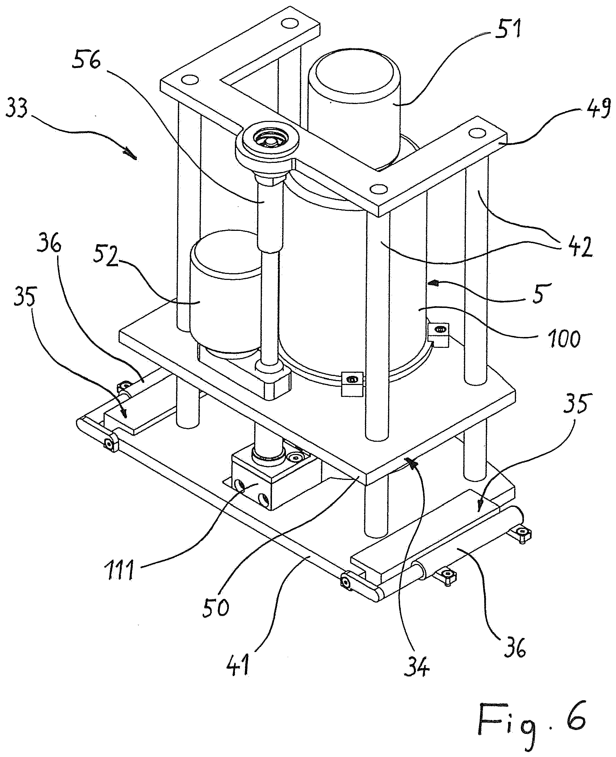

- Figur 6:: in einer Einzeldarstellung ein in der verfahrbaren Einheit angeordnetes Gestell einschließlich einem darin angeordneten Werkzeug;
- Figur 7:: das Gestell in einer Ansicht;

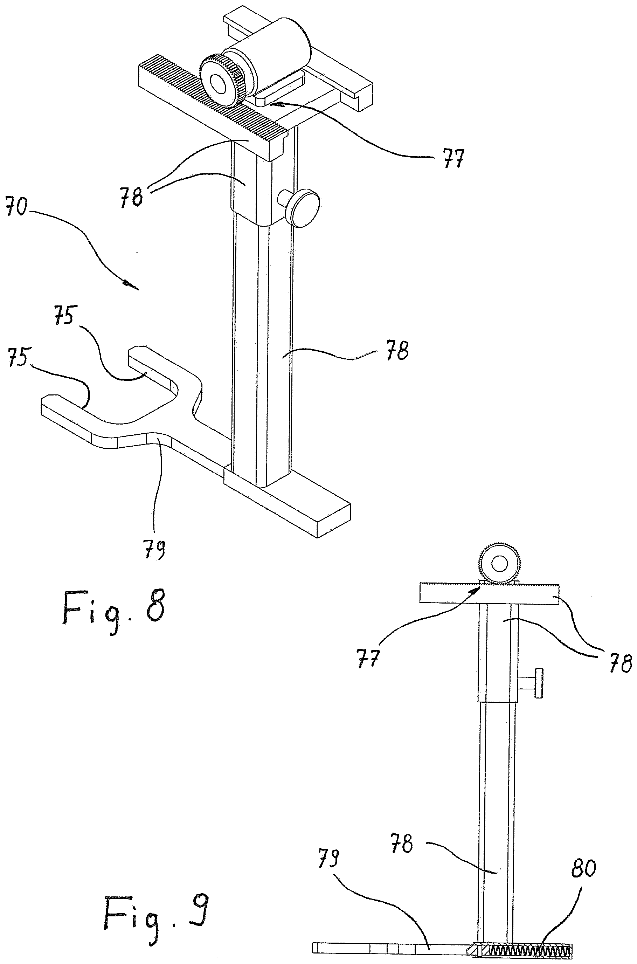

- Figur 8:: in einer Einzeldarstellung ein Haltewerkzeug, an dessen unterem Ende ein Werkzeug zum Gegenhalten beim Anziehen der Schraubverbindung angeordnet ist;
- Figur 9:: das Haltewerkzeug in einer Ansicht;
- Figur 10:: an einem Teilschnitt ein hydraulisches Werkzeug zum Anziehen von Schraubverbindungen, wobei das Werkzeug in einer Stellung wiedergegeben ist, in der es bis auf die Oberseite der Flanschverbindung abgesenkt ist und auf dieser aufsitzt;
- Figur 11:: das hydraulische Werkzeug in einer anderen Ausführungsform, bei der das Haltewerkzeug mit dem Werkzeug kombiniert ist;
- Figur 12:: das hydraulische Werkzeug in einer wiederrum anderen Ausführungsform, bei der das Haltewerkzeug im Zentrum des hydraulischen Werkzeugs angeordnet ist.

Die Vorrichtung zum Anziehen von Schraubverbindungen setzt sich zusammen aus einer verfahrbaren Einheit 1, einer räumlich getrennt angeordneten stationären Einheit 2 und einem Leitungsstrang, insbesondere einem Versorgungs- und Signalstrang 3, zwischen der verfahrbaren Einheit 1 und der stationären Einheit 2. Bestandteil der verfahrbaren Einheit 1 ist ein Werkzeug 5 zum Anziehen von Schraubverbindungen. Das Werkzeug ist bei dem hier näher beschriebenen Ausführungsbeispiel ein hydraulisch betriebener Schraubenspannzylinder 5. In der stationären Einheit 2 befindet sich die Energieversorgung der Vorrichtung. Ferner ist Bestandteil der stationären Einheit 2 eine elektronische Steuereinheit 4, die wiederum unter anderem ein Wegsteuermodul 4A und ein Dokumentationsmodul 4B umfasst. In dem Dokumentationsmodul 4B wird für jede einzelne angezogene Schraubverbindung ein Datensatz abgespeichert, der so eine spätere Überprüfung der wichtigsten Kenndaten des Verschraubungsprozesses ermöglicht.

Das Werkzeug 5 ist höheneinstellbar auf einem mittels eines Antriebs verfahrbaren Wagen 6 angeordnet. Der Wagen 6 ist daher der Werkzeugträger der Vorrichtung.

Der Wagen bzw. Werkzeugträger ist mittels daran gelagerter Laufrollen dafür eingerichtet, an einer ringförmigen Flanschverbindung 7 entlang, welche Bestandteil einer turmförmigen Windkraftanlage ist, in verschiedene Umfangspositionen zu fahren, um an jeder dieser Positionen eine dortige Schraubverbindung anzuziehen, nachzuziehen oder auch zu lösen.

Die Flanschverbindung 7 ist hier ein Doppelflansch aus einem oberen Ringflansch 7A und einem vorzugsweise flächig daran anliegenden unteren Ringflansch 7B. Der obere Ringflansch 7A befindet sich am unteren Rand eines oberen ringförmigen Turmabschnitts 8A. Der untere Ringflansch 7B befindet sich am oberen Rand eines unteren Turmabschnitts 8B. Die Turmabschnitte 8A, 8B bilden, gemeinsam mit weiteren, ähnlichen Turmabschnitten, den vertikalen Turm einer Windkraftanlage. Solche Windkraftanlagen mit Höhen bis zu 150 m bestehen aus montagetechnischen Gründen aus Turmabschnitten. Diese sind im Wesentlichen zylindrisch und umschließen einen kreisförmigen, von der Flanschverbindung 7 umgebenen Raum 9. Die Turmabschnitte können sich nach oben hin konisch verjüngen.

Die Turmabschnitte sind miteinander verschraubt, indem an dem jeweils oberen Turmabschnitt 8A der Ringflansch 7A, und an dem jeweils unmittelbar darunter angeordneten Turmabschnitt 8B der Ringflansch 7B angeformt ist. Die so aus zwei Ringflanschen bestehende Flanschverbindung 7 wird durch eine Vielzahl von Schraubverbindungen zusammengehalten. Diese sind in jeweils gleichen Abständen über den Umfang verteilt angeordnet.

Jede Schraubverbindung 10 besteht aus einem bolzenartigen Gewindeelement 11 und einer auf den Gewindeabschnitt des Gewindeelements 11 aufgeschraubten Gewindemutter 12. Die Gewindemutter 12 stützt sich mit ihrer Unterseite auf der vorzugsweise flachen Oberseite des Ringflanschs 7A ab.

Das Gewindeelement 11 ist beim Ausführungsbeispiel in der Weise ausgebildet, dass es sich wie eine Schraube mit einem radial erweiterten Bund oder Kopf von unten her gegen den unteren Ringflansch 7B der Flanschverbindung 7 abstützt.

Zwischen der Gewindemutter 12 und dem oberen Ringflansch 7A kann sich, wie bei Schraubverbindungen üblich, zusätzlich eine Unterlegscheibe befinden.

Die Schraubverbindungen 10 sind um den Raum 9 herum gleichmäßig, d.h. in gleichen Abständen entlang der Flanschverbindung 7 verteilt angeordnet. Der Umfangsabstand der Verschraubungsachse einer Schraubverbindung zu der Verschraubungsachse der unmittelbar folgenden Schraubverbindung ist also stets derselbe. Sofern daher der auf das Zentrum des Raums 9 bezogene Radius des Rings, auf dem sich die Achsen der Schraubverbindungen 10 befinden, bekannt ist und ebenso die Gesamtzahl der Schraubverbindungen, lassen sich die Distanzen in Umfangsrichtung zwischen den Achsen der Schraubverbindungen rechnerisch ermitteln. Diese geometrischen Vorgaben werden genutzt, um den Wagen 6 mit dem darauf angeordneten Werkzeug 5 entlang der Erstreckung des Flansches 7 in einzelne Arbeitspositionen zu verfahren, wobei jede Arbeitsposition dadurch gekennzeichnet ist, dass sich das Werkzeug 5 über und in Fluchtung zu der Achse der jeweils anzuziehenden Schraubverbindung 10 befindet.

Das in der Vorrichtung verwendete Werkzeug 5 kann ein hydraulischer Drehmomentschrauber, ein elektrischer Drehschrauber oder ein Schraubenspannzylinder sein.

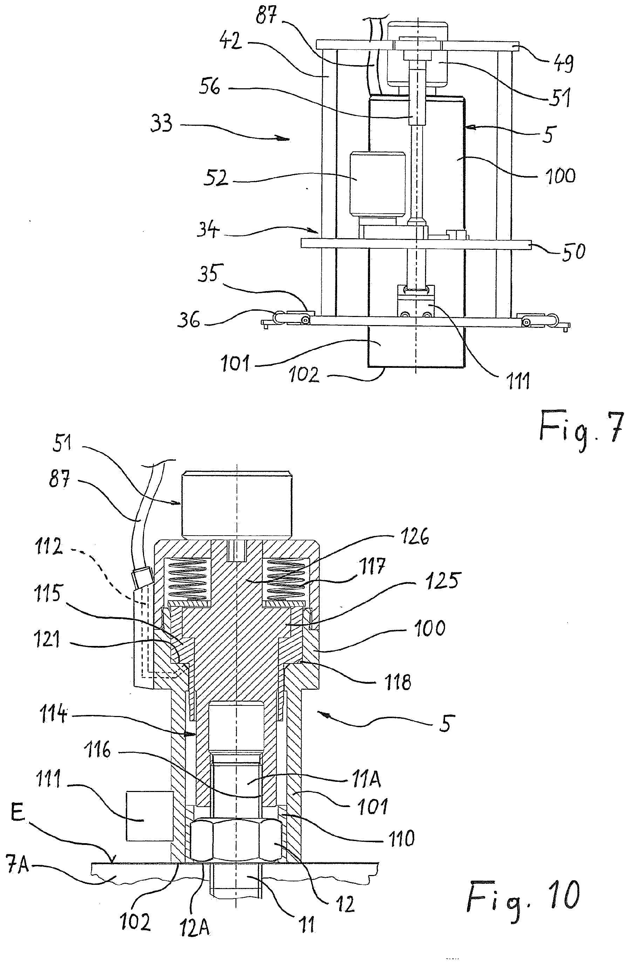

Nachfolgend anhand der Figur 10 näher beschrieben wird hierzu die Variante des Schraubenspannzylinders. Dieser zeichnet sich vor allem beim Nachziehen von Schraubverbindungen dadurch aus, dass ein weitgehend torsionsfreies Schraubenspannverfahren erreicht wird, also ohne das Auftreten größerer Torsionskräfte über der Schraubenlänge. Hierzu wird nicht unmittelbar die Mutter 12 mit hohem Anzugsmoment gedreht, sondern es wird, zum Beispiel durch hydraulische Kräfte, das Gewindeelement 11 in seiner Längsrichtung gedehnt, wodurch die Unterseite der Mutter 12 von dem Ringflansch 7A freikommt. In dem so gedehnten Zustand wird die Mutter 12 mit relativ geringem Drehmoment nachgezogen. Ein solcher Schraubenspannzylinder 5 und ein solches Schraubenspannverfahren unter Längung des Gewindeelements 11 werden später noch näher beschrieben.

Sämtliche Schraubverbindungen 10 erstrecken sich mit ihren Verschraubungsachsen rechtwinklig zur Oberseite des Ringflansches 7A und parallel zu der zentralen Hauptachse der Turmabschnitte 8A, 8B.

Grundelement der verfahrbaren Einheit 1 ist der Werkzeugträger 20. Damit dieser entlang der Flanschverbindung in einzelne Arbeitspositionen verfahren werden kann, ist der Werkzeugträger 20 mit mehreren Laufrollen versehen, die teils angetrieben sind und so den Werkzeugträger 20 vorwärtsbewegen, und die teils nicht angetrieben sind, also beim Verfahren nur mitrollen.

Bei dem hier wiedergegebenen Ausführungsbeispiel sind zwei Rollen 21A, 21B vorhanden, über die der Werkzeugträger 20 auf der Oberseite der Flanschverbindung 7 abgestützt ist. Die Rollen 21A, 21B sind auf horizontalen Drehachsen an dem Werkzeugträger 20 gelagert. Die Rolle 21A ist eine angetriebene Rolle, hingen die Rolle 21B eine frei mitlaufende Rolle. Die Rollen 21A, 21B tragen den überwiegenden Teil der Gewichtskräfte des Werkzeugträgers 20 und der darauf angeordneten Aggregate einschließlich des Werkzeugs 5. Da die Rollen 21A, 21B stark gewichtsbelastet sind, bietet es sich an, dass zumindest eine dieser Rollen, hier die Rolle 21A, die Antriebsrolle ist.

Ein elektrischer Antriebsmotor 24 treibt die Rolle 21A an und bildet mit dieser gemeinsam den Fahrantrieb der Vorrichtung. Der Antriebsmotor 24 des Fahrantriebs sitzt nicht auf derselben Welle wie die angetriebene Rolle 21A, vielmehr überträgt ein Zahnriemen oder eine Kette die Drehung des Antriebsmotors 24 in eine gleiche, übersetzte oder untersetzte Drehung der Antriebsrolle 21A. Jedoch kann, soweit genügend Platz vorhanden ist, der Antriebsmotor 24 auf derselben Welle wie die Rolle 21A angeordnet sein. Der Antriebsmotor 24 des Fahrantriebs erhält Fahrantriebs-Steuersignale von der Steuereinheit 4.

Im Antriebsweg zwischen Antriebsmotor 24 und Rolle 21A ist eine schaltbare Kupplung 25 angeordnet, vorzugsweise eine elektromagnetische Kupplung. Die Kupplung 25 erhält ihre Kupplungs-Schaltsignale ebenfalls von der elektronischen Steuereinheit 4. Wird die Kupplung 25 getrennt bzw. ausgeschaltet, wird dadurch die Rolle frei drehbar, so dass sich der Werkzeugträger 20 in Fahrtrichtung frei bewegen kann und das so mögliche Spiel die Zentrierung des Werkzeugs 5 zu der Verschraubungsachse der jeweiligen Schraubverbindung 10 vereinfacht.

An dem Werkzeugträger 20 sind außerdem, allerdings auf im Wesentlichen vertikalen Drehachsen gelagert, Rollen 22 gelagert. Diese zusätzlichen Laufrollen stützen den Wagen gegen die Innenwand 23 des Turmabschnitts ab. Die Rollen 22 sind, verglichen mit den Rollen 21A, 21B, nur wenig gewichtsbelastet. Gleichwohl sind sie gegen die Innenwand 23 abgestützt, was durch eine Anordnung der Rollen 21A, 21B erreicht wird, bei der sich der Gewichtsschwerpunkt des Wagens weiter außen als die Rolllinie der Rollen 21A, 21B befindet.

Die zusätzlichen Rollen 22 sind nicht angetriebene, also nur mitlaufende Rollen. Vorzugsweise ist zumindest eine der Rollen 22 schlupffrei mit einem Winkelencoder 26 gekoppelt. Der Winkelencoder 26 ermöglicht die Sensierung von Winkelsignalen der Rolle. Aus den Winkelsignalen errechnet der Prozessor der elektronischen Steuereinheit 4 die Wegstrecke des Werkzeugträgers 20 längs der Innenwand 23. Daraus wiederum lässt sich rechnerisch mittels des Prozessors bestimmen und überprüfen, welche Distanzen der Werkzeugträger 20 längs des Rings, auf dem die Verschraubungen 10 angeordnet sind, zurücklegt oder zurückgelegt hat.

Zur Seitenführung des Wagens 6 ist unten am Werkzeugträger 20 ein vorzugsweise zweimal vorhandenes Ausrichtelement 30 befestigt. Das Ausrichtelement 30 ist mit einer sich in Fahrtrichtung erstreckenden Ausrichtfläche 30A versehen, deren Flächennormale nach innen und daher entgegengesetzt zu der Richtung weist, in die sich der Werkzeugträger über die zusätzlichen Rollen 22 abstützt. Die Ausrichtflächen 30A sind in solcher Höhe an dem Wagen 6 angeordnet, dass sie sich im Betrieb auf der Höhe der Gewindeendabschnitte 11A der Gewindeelemente 11 und oberhalb der Mutter 12 befinden. Sie befinden sich femer geringfügig auswärts der Gewindeendabschnitte 11A, an denen sie sich abstützen können. Dies hat bei der Fahrt des Wagens 6 zur Folge, dass dieser an der Rückseite der Gewindeendabschnitte 11A abgestützt ist, so dass der Wagen 6 die durch die Rollen 21A, 21B vorgegebene Lauflinie nicht nach innen verlassen kann. In die andere Richtung, d. h. nach außen, bewirken bereits die zusätzlichen Rollen 22 die notwendige Seitenführung des Wagens.

Bestandteile des angetriebenen Werkzeugträgers 20 sind eine untere Plattform 31 und eine zu der unteren Plattform 31 fest angeordnete obere Plattform 32. Unter der unteren Plattform 31 sind die Rollen 21A, 21B abgestützt. Zum einfachen Anheben und Transportieren des kompletten Wagens 6 sind an der oberen Plattform 32 Ösen befestigt, in die sich ein Kranhaken einklinken lässt.

Auf einer Fläche an der Oberseite der unteren Plattform 31 ist ein das Werkzeug 5 aufnehmendes Gestell 33 abgestützt. Das Gestell 33 ist als eine Vertikalführung 34 zur Höhenverstellung des Werkzeugs 5 ausgebildet.

An der Oberseite der Plattform 31 einerseits und am Boden des Gestells 33 andererseits sind Elemente einer Querführung 35 mit Führungsrichtung quer zur Längsrichtung und damit Fahrtrichtung des Werkzeugträgers 20 vorhanden. Über die reibungsarm arbeitende Querführung 35 ist das Gestell 33 und damit das darin angeordnete Werkzeug 5 verschieblich auf der Plattform 31 gelagert, und zwar mit Verschiebemöglichkeit quer zur Fahrtrichtung des Werkzeugträgers.

Die Verschiebemöglichkeit des Gestells 33 relativ zu der Plattform 31 kann durch eine Federanordnung 36 ergänzt sein, welche, bei Fehlen von Querkräften, das Gestell 33 in Bezug auf die Plattform 31 in einer Mittelstellung hält. Wirken also keine Querkräfte auf das Werkzeug 5 und damit auf das Gestell 33, kehrt dieses, geführt durch die Querführung 35 und unter der Kraft der Federanordnung 36, selbsttätig in die Mittelstellung zurück.

Das Gestell 33 bildet zugleich eine Vertikalführung 34 für die Höhenverstellung des Werkzeugs 5. Hierzu setzt sich das Gestell zusammen aus der verschieblich auf der Plattform 31 aufliegenden und in der Querführung 35 geführten Gestellbasis 41, aus starr an der Gestellbasis befestigten, vertikalen Führungsstangen 42, aus einem die oberen Enden dieser Stangen verbindenden oberen Gestellrahmen 49 sowie aus einem durch Motorantrieb in der Höhe verstellbaren Gestellrahmen 50. Der auf und ab bewegliche Gestellrahmen 50 wird durch die Führungsstangen 42 der Vertikalführung 34 geführt. An dem Gestellrahmen 50 ist das Werkzeug 5 fixiert.

Für den eigentlichen Spannprozess arbeitet das Werkzeug 5 zwar hydraulisch. Für einen automatischen Werkzeugbetrieb sind jedoch auch mindestens zwei elektrische Antriebe 51, 52 vorhanden. Beide Antriebe 51, 52 arbeiten in Abhängigkeit von Werkzeug-Steuersignalen der Steuereinheit. Der erste elektrische Antrieb 51 treibt eine drehbar in dem Schraubenspannzylinder angeordnete Wechselbuchse an. Er befindet sich vorzugsweise oben auf dem Zylindergehäuse des Schraubenspannzylinders. Der zweite elektrische Antrieb 52 ist weiter unten und vorzugsweise an dem höhenverstellbaren Gestellrahmen 50 angeordnet.

Der zweite elektrische Antrieb 52 treibt eine Drehhülse an, durch welche die Gewindemutter 12 mittels Formschluss in Drehung versetzbar ist. Zusätzlich kann der zweite Antrieb 52 dafür ausgebildet sein, den Gestellrahmen 50 und damit das Werkzeug 5 gegenüber dem Gestell 33 zu heben und zu senken, was beim Ausführungsbeispiel über einen parallel zu den Führungsstangen 42 angeordneten Gewindetrieb 56 erreicht wird, mit dem die Antriebswelle des zweiten Antriebs 52 koppelbar ist.

Der zweite Antrieb 52 hat daher zwei Funktionen. Abhängig von entsprechenden Werkzeug-Steuersignalen der Steuereinheit ist er entweder mit der Drehhülse oder mit dem Gewindetrieb 56 koppelbar.

Beim Anziehen, Nachziehen oder auch Lösen der Schraubverbindungen 10 kann es prinzipiell passieren, dass die Gewindeelemente 11 ungewollt mitdrehen. Um dies während des Spannprozesses zu verhindern, ist an dem Werkzeugträger 20 außer dem Anzugswerkzeug noch ein als Gegenhalter dienendes Haltewerkzeug 70 angeordnet. Bestandteil des Haltewerkzeugs 70 ist mindestens eine Gegenhaltefläche 75, welche gegen eine Fläche an dem radial erweiterten Abschnitt des Gewindeelements 11 abstützbar ist, zum Beispiel an die Fläche eines Sechskants, mit dem das Gewindeelement 11 unterhalb der Flanschverbindung 7 versehen ist. Der dadurch bewirkte Formschluss verhindert das Mitdrehen des Gewindeelements 11 während des Anziehens, Nachziehens oder des Lösens der Schraubverbindung 10.

Um die Gegenhaltefläche 75 in Eingriff mit der Fläche an dem radial erweiterten Abschnitt des Gewindeelements 11 zu bringen, ist an der unteren Plattform 31 ein elektrischer Antrieb 77 zum Hin- und Zurückbewegen des Haltewerkzeugs 70 zwischen einer passiven Position und einer aktiven Position, der Gegenhalteposition, angeordnet. Nur in der aktiven Position gelangt die Gegenhaltefläche 75 zur Anlage an der entsprechenden Fläche und insbesondere Sechskantfläche des Gewindeelements 11. Der Prozessor der Steuereinheit 4 ist dazu ausgebildet, über Haltewerkzeug-Steuersignale den elektrischen Antrieb 77 zu steuern.

Der Werkzeugabschnitt 79 des Haltewerkzeugs 70 ist bei der dargestellten Ausführungsform nach Art eines Maulschlüssels mit zwei einander gegenüberliegend angeordneten und zueinander parallelen Gegenhalteflächen 75 gestaltet.

Der Antrieb 77 des Haltewerkzeugs 70 arbeitet hier quer zu den Achsen der Schraubverbindungen. Der Antrieb 77 zum Hin- und Zurückbewegen des Haltewerkzeugs 70 ist bei der hier beschriebenen Ausführungsform als Zahnstangenantrieb ausgebildet. Alternativ besteht die auf der Zeichnung nicht dargestellte Möglichkeit, dass der Antrieb des Haltewerkzeugs parallel zu der Achse der Schraubverbindung 10 arbeitet, also vertikal.

Das Haltewerkzeug 70 umfasst einen antriebsseitig mit dem Antrieb 77 verbundenen Werkzeuggrundkörper 78 sowie den Werkzeugabschnitt 79 mit den daran ausgebildeten Gegenhalteflächen 75. Der Werkzeugabschnitt 79 ist entgegen der Kraft einer Feder 80 beweglich an dem Werkzeuggrundkörper 78 geführt. Wird daher das Haltewerkzeug 70 gegen das Gewindeelement 11 gefahren, hält die Feder 80 den Werkzeugabschnitt 79 solange zurück, bis diese Teile eine den Formschluss ermöglichende Drehlage zueinander eingenommen haben. Denn durch Relativdrehung der beteiligten Teile ist irgendwann eine Drehlage erreicht, in der die Gegenhalteflächen 75 unter Federdruck sicher und formschlüssig einrasten können und dabei in Eingriff gelangen.

Bei unbelastetem Werkzeugabschnitt 79, also ohne Anlage oder Formschluss an dem Gewindeelement, ist der Werkzeugabschnitt 79 unter der Kraft der Feder 80 gegen einen Anschlag 81 abgestützt, der sich an dem Werkzeuggrundkörper 78 befindet.

Da die Rollen 21A, 21B eine Aufstandsebene E des Wagens bzw. des Werkzeugträgers 20 definieren, befindet sich der Antrieb 77 des Haltewerkzeugs 70 oberhalb dieser Aufstandsebene E, wobei der Antrieb vorzugsweise an der Plattform 31 befestigt ist. Von dort erstreckt sich der Werkzeuggrundkörper 78 über die Aufstandsebene E hinweg bis hinab zu dem Werkzeugabschnitt 79. Dieser befindet sich in einer Höhe unterhalb der Flanschverbindung 7.

Die Länge des Werkzeuggrundkörpers 78 und damit die Grundposition des Werkzeugabschnitts 79 ist von Hand einstellbar. Die so eingestellte Position ist mittels einer Klemmschraube gesichert. Auch der Antrieb 77 des Haltewerkzeugs 70 wird durch Steuersignale der Steuereinheit 4 gesteuert, nämlich durch Haltewerkzeug-Steuersignale. Die Steuerung ist in der Weise, dass das Haltewerkzeug 70 frühestens dann aus seiner Ruhestellung in seine aktive Position bewegt wird, wenn der Werkzeugträger 20 eine Arbeitsposition eingenommen hat, in der die Achse des Werkzeugs 5 zu der Achse des jeweiligen Gewindeelements 11 fluchtet.

Im Praxisbetrieb der Vorrichtung wird die stationäre Einheit 2 räumlich getrennt von der verfahrbaren Einheit 1, also dem Wagen, an einem geeigneten Ort innerhalb des Raums 9 platziert. Dieser Ort kann z. B. ein Zwischenboden sein oder eine fest montierte Leiter für das Servicepersonal, welche einzelne Ebenen des Turms verbindet. Vorzugsweise aber wird die stationäre Einheit 2 möglichst zentral innerhalb des Raums 9 platziert. Daher ist es erforderlich, über den geeigneten Versorgungs- und Signalstrang 3 die Aggregate und Einrichtungen der stationären Einheit 2 mit dem Wagen 6 zu verbinden. Zu der stationären Einheit 2 gehören Beispiel ein Energiemodul 88 bzw. Energiemodule zur Energieversorgung des Fahrantriebs, des Werkzeugs 5 einschließlich aller seiner Funktionen, und des Haltewerkzeugs 70.

Auch die Steuereinheit 4 ist Bestandteil der stationären Einheit 2. Die Steuereinheit 4 ist unter anderem dazu ausgebildet, über Fahrantrieb-Steuersignale den Werkzeugträger 20 in Längsrichtung des Werkzeugträgers 20 bis in eine Arbeitsposition zu fahren, in der das Werkzeug 5 der jeweils anzuziehenden Schraubverbindung gegenüberliegt, und über Werkzeug-Steuersignale das Anziehen der Schraubverbindung und Drehen der Mutter durchzuführen.

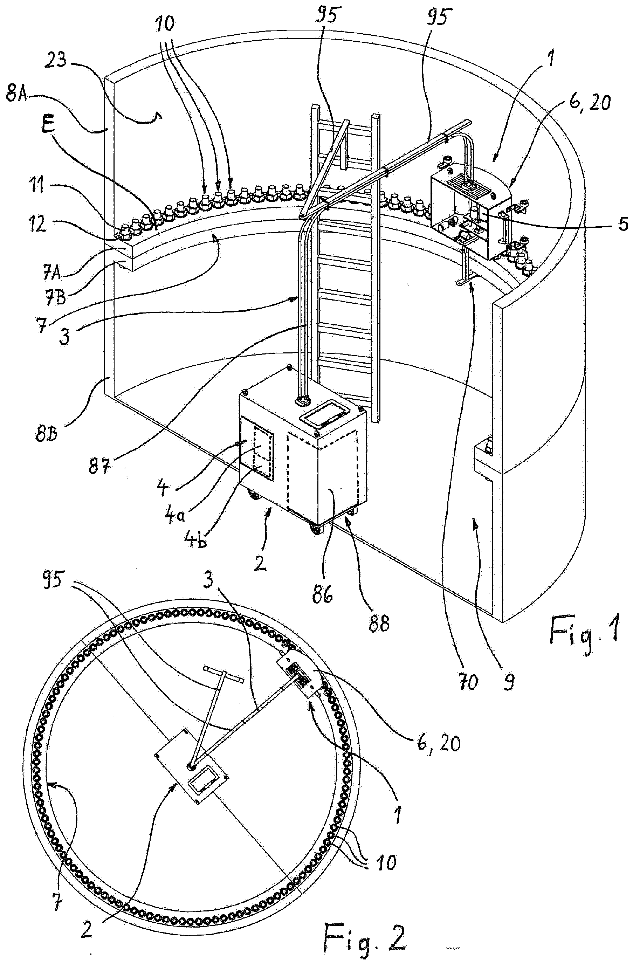

Vorzugsweise ist die Steuereinheit 4 an dem Energiemodul 88 angeordnet, oder mit diesem gemeinsam auf einem Träger angeordnet. Bei der Ausführungsform nach den Figuren 1 und 2 ist die stationäre Einheit 2 zu einer Box zusammengefasst. Laufrollen unter der Box sowie Handgriffe an der Box erleichtern deren Handhabung beim Transport.

Für die Energieversorgung führen Energieversorgungsleitungen von dem Energiemodul 88 zu dem Werkzeugträger 20. Hierzu zählen z.B. Stromkabel für die elektrische Versorgung der verschiedenen elektrischen Antriebe des Werkzeugträgers 20, des Werkzeugs 5 und des Haltewerkzeugs 70. Auch ein elektrischer Stromverteiler kann Bestandteil des Energiemoduls 88 sein.

Zu den Versorgungssträngen zählen ferner eine Hydraulikleitung 87 zur Versorgung des hydraulisch angetriebenen Werkzeugs 5. Auch die zugehörige Hydraulikpumpe 86 ist Bestandteil der stationären Einheit 2.

Zur Übertragung der Fahrantrieb-Steuersignale, der Werkzeug-Steuersignale, der Haltewerkzeug-Steuersignale und der Kupplungs-Schaltsignale besteht ferner mindestens eine Signalleitung zwischen der Steuereinheit 4 und dem Werkzeugträger 20. Die Signalverbindung kann allerdings auch kabellos bzw. drahtlos sein.

Die genannten, als Versorgungs- und Signalstrang 3 zusammengefassten Leitungen zwischen stationärer Einheit 2 und dem Wagen 6 sind, soweit möglich und zumindest auf einer Teillänge, parallel bzw. miteinander mechanisch verbunden geführt.

Für das Führen des Strangs 3 ist Bestandteil der Vorrichtung ein möglichst zentral in dem Raum 9 installiertes Schwenkgestell 95 mit einer oder mehreren senkrechten Schwenkachsen. Das Schwenkgestell 95 ist zu seiner Befestigung innerhalb des Raums 9 mit Befestigungsmitteln, z. B. anschraubbaren Haltern, versehen. Der Versorgungs- und Signalstrang 3 ist in das Schwenkgestell 95 eingehängt. Dieses ist dafür ausgebildet, den Strang 3 innerhalb des Raums 9 über einen Drehwinkel von mindestens annähernd 360° zu stützen, so dass der Strang 3 der Bewegung des Wagens 6 über den gesamten Umfang des Flansches folgen kann.

Damit Einbauten und Hindernisse in dem Raum 9 die Bewegung des Strangs 3 über volle 360° nicht beeinträchtigen, ist an dem Werkzeugträger 20 die Möglichkeit geschaffen, den dort endenden Abschnitt des Versorgungs- und Signalstrangs 3 relativ zu dem Werkzeugträger 20 in Fahrtrichtung zu verlagern. Dazu ist der Werkzeugträger 20 an seiner oberen Plattform 32 mit einem in Fahrtrichtung des Werkzeugträgers 20 beweglichen Schieber 96 versehen. Der Schieber 96 ist mit einer Öffnung versehen, durch die hindurch der Strang 3 in das Innere des Wagens bzw. Werkzeugträgers 20 gelangt. Der Schieber 96 mit der Öffnung ist frei beweglich, so dass je nach Stellung des Schiebers der Strang 3 eher vorne oder eher hinten in das Innere des Wagens führt.

Fig. 10 zeigt den hier das Werkzeug bildenden, hydraulisch zu betreibenden Schraubenspannzylinder 5, welcher dem Anziehen, vor allem Nachziehen, und ggf. auch dem Lösen der in den Figuren 1 und 2 wiedergegebenen Schraubverbindungen 10 dient. Dargestellt ist der Schraubenspannzylinder in seiner Betriebsstellung vor dem Aufbringen von Hydraulikdruck. In dieser Stellung ist er soweit abgesenkt, dass mit sich mit seiner Unterseite 102 auf dem Ringflansch 7A abstützt.

Mit dem Schraubenspannzylinder 5 lässt sich in Bolzenlängsrichtung eine vorgegebene Vorspannkraft auf das Gewindeelement 11 aufbringen, wodurch sich das Gewindeelement 11 etwas dehnt, um währenddessen die Gewindemutter 12 der Schraubverbindung anzuziehen bzw. nachzuziehen.

Eine in einem Zylindergehäuse 100 des Schraubenspannzylinders 5 drehbar angeordnete Wechselbuchse 114 ist an ihrem einen Ende mit einem Innengewinde 116 versehen. Mit diesem Gewinde wird die Wechselbuchse 114 vor Beginn des Spannprozesses durch Drehen der Wechselbuchse 114 auf jenen freien Gewindeendabschnitt 11A des Gewindeelements 11 aufgeschraubt, der nach oben über die Mutter 12 hinausragt. Mit diesem Aufschrauben der Wechselbuchse 114 geht auch ein entsprechendes Absenken des ganzen Schraubenspannzylinders 5 bis zur Auflage der Unterseite 102 auf dem Ringflansch 7A einher, da die Wechselbuchse kein oder nur ein geringes Längsspiel relativ zu dem Zylindergehäuse 100 hat.

Anschließend wird die so mit dem Gewindeelement 11 verschraubte Wechselbuchse 114 hydraulisch unter Zug gesetzt, wodurch sich die Verschraubung in Längsrichtung dehnt. Die Aufstandsfläche 12A der Gewindemutter 12 kommt dadurch frei, so dass sich die Gewindemutter 12 dann mit nur wenig Drehwiderstand drehen und auf diese Weise gegen die Unterlage, also gegen den Ringflansch 7A und ggf. gegen eine Unterlegscheibe anziehen bzw. Nachziehen lässt.

Der hydraulische Spannmechanismus befindet sich in dem druckfesten Zylindergehäuse 100. Dieses kann sich auch modulartig aus mehreren Zylinderabschnitten zusammensetzen. Die starre Fortsetzung des Zylindergehäuses 100 ist ein Stützrohr 101. Dieses ist entweder wie dargestellt selbst Teil des Zylindergehäuses 100, oder ein separates Bauteil. Das Stützrohr 101 ist zu der Schraubverbindung hin offen, umgibt dabei die Gewindemutter 12 und stützt sich mit der Unterseite 102 gegen die Oberseite des Ringflanschs 7A ab. Dieser bildet daher beim Spannprozess das Widerlager. Der Spannprozess erfolgt durch Zug der Wechselbuchse 114 an dem Gewindeendabschnitt 11A, wobei zum Nachziehen der Mutter 12 diese nach unten geschraubt wird, bis sie mit ihrer Aufstandsfläche 12A wieder fest gegen den Flansch 7A anliegt.

Das Stützrohr 101 ist mit mindestens einer Öffnung versehen, die von solcher Größe ist, dass sich durch die Öffnung hindurch die Mutter 12 drehen und damit nachziehen lässt. Dies ist natürlich nur möglich, wenn zugleich die Spannvorrichtung arbeitet, und daher die Mutter 12 nicht durch erhebliche Reibung belastet ist. Das Drehen der Gewindemutter 12 erfolgt mittels einer die Mutter umschließenden Drehhülse 110. Angetrieben wird die Drehhülse 110 durch ein Getriebe 111, welches seitlich an dem Stützrohr 101 angebracht ist und durch dessen Öffnung hindurch arbeitet.

Das Zylindergehäuse 100 ist mit einem Hydraulikanschluss 112 versehen, über den ein hydraulischer Arbeitsraum 118 im Inneren des Werkzeugs über die flexible, aber druckfeste Hydraulikleitung 87 mit einer Hydraulikpumpe 86 verbunden ist (Fig. 1). Die Hydraulikpumpe 86 ist Bestandteil der stationären Einheit 2.

Über den Hydraulikanschluss 112 gelangt unter hohem Druck stehendes Hydraulikfluid in den Arbeitsraum 118, wodurch ein längsbeweglich in dem Zylindergehäuse 100 gelagerter Kolben 115 mit Hydraulikdruck beaufschlagt wird. Durch den Aufbau von Hydraulikkraft in dem hydraulischen Arbeitsraum 118 wird der Kolben 115 hochgedrückt. Dies erfolgt entgegen der Kraft einer den Kolben 115 beaufschlagenden Feder 117. Die Feder 117 dient als Kolbenrückstellfeder und beaufschlagt den Kolben 115 unmittelbar mit einer Kraft die bestrebt ist, den Kolben in seiner Grundstellung zu halten, in der der hydraulische Arbeitsraum 118 sein kleinstes Volumen hat.

Der Kolben 115 umgibt in Ringform die Wechselbuchse 114. Der Kolben 115 ist an seinem Innenrand mit einer umlaufenden Stufe versehen, die eine Mitnehmerfläche 121 bildet, an der sich die Wechselbuchse 114 mit einem radial erweiterten Abschnitt 125 abstützt. Dadurch ist die Wechselbuchse 114 durch den Kolben 115 mitnehmbar. Ohne Druckbelastung ist die Wechselbuchse 114 gegenüber dem Kolben 115 und gegenüber dem Zylindergehäuse 100 frei drehbar.

Die Wechselbuchse 114 befindet sich ebenso wie der Kolben 115 zentral auf der Längsachse des Zylindergehäuses 100 und setzt sich aufeinanderfolgend zusammen aus einem Abschnitt mit dem Innengewinde 116, welches auf den Gewindeendabschnitt 11A des Gewindeelements 11 aufgeschraubt wird, aus dem radial erweiterten Abschnitt 125 und aus einem Antriebsabschnitt 126. Der Antriebsabschnitt 126 befindet sich an dem dem Gewindeelement 11 abgewandten Ende der Wechselbuchse 114.

An dem Antriebsabschnitt 126 greift die Welle des in Abhängigkeit von Werkzeug-Steuersignalen der Steuereinheit betriebenen elektrischen Antriebs 51 an, um die Wechselbuchse 114 zu drehen und diese entweder, vor dem Spannprozess, unter Absenken des gesamten Zylindergehäuses 100 auf den Gewindeendabschnitt 11A aufzuschrauben oder, nach dem Spannprozess, unter Anheben des gesamten Zylindergehäuses 100 wieder von dem Gewindeendabschnitt 11A abzuschrauben.

Soweit vor und nach dem Spannprozess eine weitergehende, also nicht allein durch das Drehen der Wechselbuchse 114 realisierbare Höhenverstellung des Zylindergehäuses 100 erforderlich ist, erfolgt diese zusätzliche Höhenverstellung mittels der elektrisch angetriebenen Vertikalführung 34. Auch diese arbeitet in Abhängigkeit von Steuersignalen, nämlich Werkzeug-Steuersignalen, der Steuereinheit 4.

Erst wenn die Wechselbuchse 114 auf den Gewindeendabschnitt 11A aufgeschraubt ist, wird durch die Steuereinheit 4 der hydraulische Spannprozess gestartet, indem die Hydraulikpumpe 86, aufgrund von Hydraulik-Steuersignalen der Steuereinheit 4, Hydraulikdruck aufbaut.

Auch das kontrollierte, motorgetriebene Auf- und Abschrauben der Wechselbuchse 114 erfolgt in Abhängigkeit von Werkzeug-Steuersignalen der Steuereinheit 4.

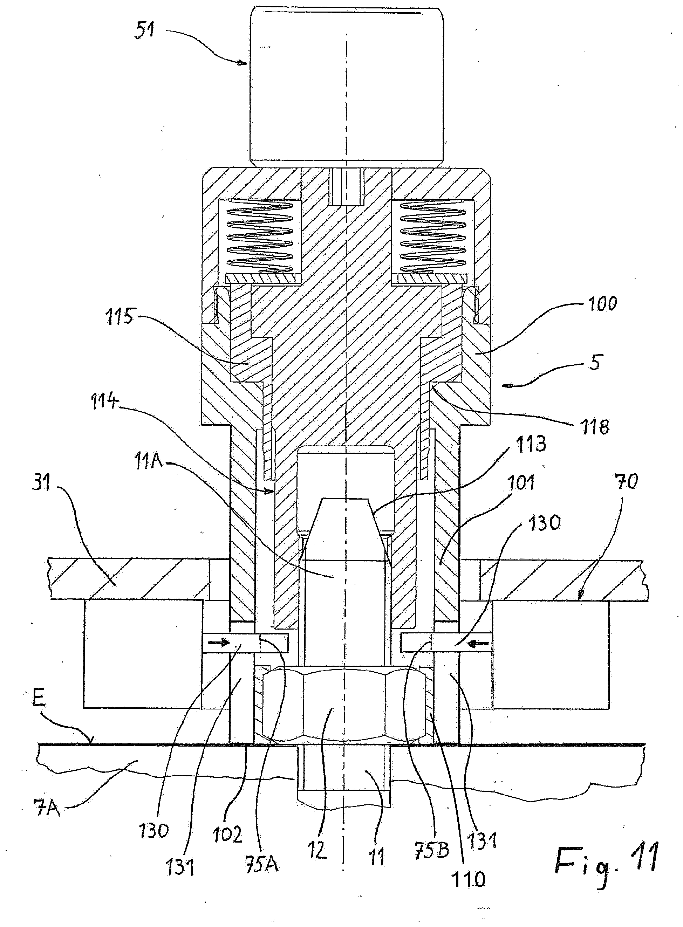

Figur 11 zeigt eine Ausführungsform, bei der das gegen Mitdrehen sichernde Haltewerkzeug 70 und das Werkzeug 5 kombiniert an dem Wagen bzw. dem Werkzeugträger angeordnet sind.

Das Haltewerkzeug 70 ist an dem Werkzeugträger 20 befestigt, hier an dessen unterer Plattform 31, und umfasst zwei aufeinander zu mit Ausrichtung auf die Verschraubungsachse bewegliche Klemmbacken 130. Deren Enden bilden hier die Gegenhalteflächen 75A, 75B, und sind hierzu als Schalen gestaltet. Der Radius der Schalen ist im Wesentlichen gleich dem Radius des Gewindeabschnitts 11A des Gewindeelements 11.

Der Antrieb der beiden Klemmbacken 130 erfolgt elektrisch, wobei wiederum die Steuereinheit 4 (Figur 1) dazu ausgebildet ist, diesen Antrieb über die Haltewerkzeug- Steuersignale zu kontrollieren. Damit bei dieser Ausführungsform die Gegenhalteflächen 75A, 75B unmittelbar auf den Gewindeabschnitt pressen, muss der Antrieb des Haltewerkzeugs 70 relativ hohe Druckkräfte erzeugen. Um hier zusätzlich den Reibungswiderstand zu erhöhen, können die Gegenhalteflächen 75A, 75B einen geeigneten Reibbelag, z.B. Gummi, oder eine geeingnete nichtglatte Oberfläche aufweisen. Z.B. kann diese Oberfläche in ihrer Struktur so auf die Außenstruktur des Gewindes abgestimmt sein, dass eine weitgehende Blockierung gegen Mitdrehen erreicht wird.

Die Klemmbacken 130 des Haltewerkzeugs 70 erstrecken sich durch Öffnungen 131 in dem Werkzeug 5, wobei sich die Gegenhalteflächen 75A, 75B innerhalb des Werkzeugs 5 befinden. Die Klemmbacken 130 sind in dem fest an dem Werkzeugträger montierten Haltewerkzeug 70 so geführt, dass sie ausschließlich, mittels des Antriebs, in ihrer Klemmrichtung beweglich sind.

Die Öffnungen 131 befinden sich in dem Stützrohr 101 des Werkzeugs 5. Sie reichen durchgehend bis zu der Unterseite 102 des Stützrohrs 101. Dadurch ist sichergestellt, dass das Werkzeug 5, wenn dieses für den Spannprozess abgesenkt wird, daran nicht durch die Bauteile des Haltewerkzeugs 70 gehindert wird. Das Werkzeug 5 und das Haltewerkzeug 70 sind zwar baulich kombiniert, ihre Funktionen sind jedoch getrennt voneinander.

Die Ausführungsform Figur 11 macht von dem Umstand Gebrauch, dass zwischen der Oberseite der Mutter 12 und jenem Gewindeendabschnitt 11A, welcher von der Wechselbuchse 114 umschlossen ist, in der Praxis oft noch ein Gewindelängsabschnitt von ca. 5 mm zur Verfügung steht. Dieser Gewindelängsabschnitt ist ausreichend, um mittels der dort zusammengefahrenen Klemmbacken 130 das Mitdrehen des Gewindeelements 11 zu unterbinden.

Auch bei der Ausführungsform nach Fig. 11 kann die Steuereinheit 4 (Fig. 1) dazu ausgebildet sein, über Fahrantrieb-Steuersignale den Werkzeugträger 20 einschließlich des Schraubenspannzylinders 5 bis in eine Arbeitsposition zu fahren, in der der Schraubenspannzylinder 5 der jeweils anzuziehenden Schraubverbindung gegenüberliegt, und über Werkzeug- Steuersignale das axiale Anziehen der Schraubverbindung und das Drehen der Mutter 12 zu kontrollieren. Zusätzlich ist die Steuereinheit 4 (Fig. 1) dazu ausgebildet, über Haltewerkzeug-Steuersignale den Antrieb des Haltewerkzeugs 70 zu kontrollieren.

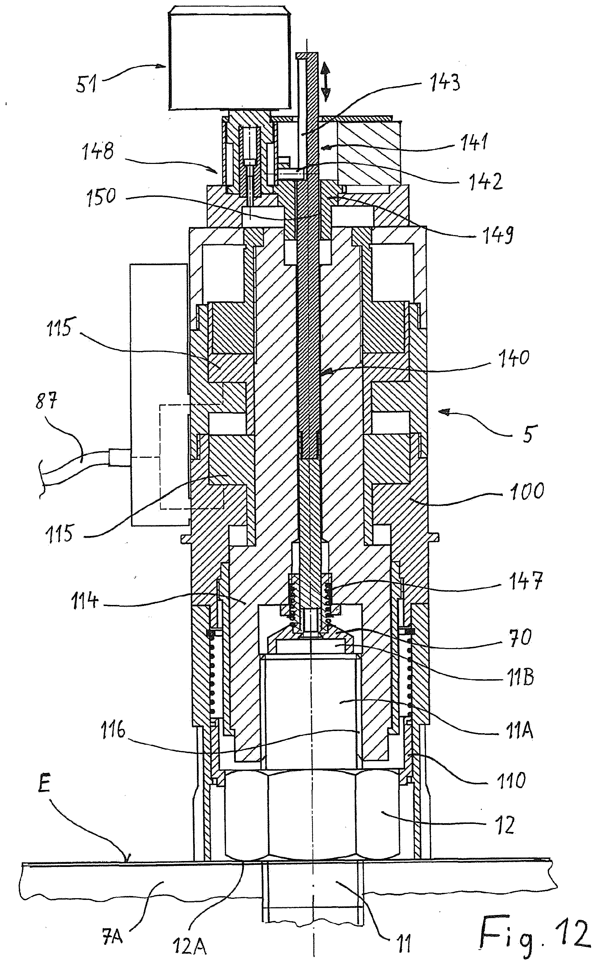

Fig. 12 zeigt eine weitere Ausführungsform. Bei dieser ist das gegen Mitdrehen sichernde Haltewerkzeug 70 zentral in dem als Schraubenspannzylinder ausgebildeten Werkzeug 5 angeordnet. Der Schraubenspannzylinder selbst entspricht in seiner Grundbauart der Ausführungsform nach Fig. 10 oder Fig. 11. Dies gilt für das Zylindergehäuse 100, für den darin geführten Kolben, welcher hier allerdings ein Doppelkolben 115 ist, für die in dem Zylindergehäuse drehbare Wechselbuchse 114 und für die drehbar in dem Zylindergehäuse angeordnete Drehhülse 110 zum Drehen der Mutter 12.

Bei Fig. 12 ist auf der Längsachse der Wechselbuchse 114 ein Stab 140 angeordnet, wozu die Wechselbuchse 114 mit einer entsprechenden Längsbohrung versehen ist. Der ein- oder mehrteilige Stab 140 ist an seinem in Fig. 12 unteren Ende mit dem Haltewerkzeug 70 versehen und ist im Bereich seines in Fig. 12 oberen Endes mit einer Verdrehsicherung 141 versehen. Die Verdrehsicherung 141 hält den Stab 140 drehfest relativ zu dem Zylindergehäuse 100. Dies wird beim Ausführungsbeispiel erreicht, indem ein gehäusefester Bolzen 142 in eine Längsnut 143 in dem Stab 140 eingreift. Die Längsnut 143 erstreckt sich axial nur über einen Teil der Länge des 140.

Die Ausführungsform Fig. 12 eignet sich für solche Schraubverbindungen, bei denen das Gewindeelement 11 an der Stirnseite seines Gewindeendabschnitts 11A zusätzlich mit einem Mehrkant 11B versehen ist. Der Mehrkant 11B ist hier ein axial vorstehender Vierkant, kann aber auch z. B. ein Sechskant oder ein versenkt in dem Gewindeendabschnitt 11A ausgebildeter Innenvierkant oder Innensechskant sein.

Das Haltewerkzeug 70 ist als korrespondierender Mehrkant gestaltet, hier also als Innenvierkant, welcher durch Formschluss mit dem Mehrkant 11B koppelbar ist. Zur Ausbildung des Haltewerkzeug 70 ist das untere Ende des Stabs 140 entsprechend vergrößert.

Das Haltewerkzeug 70 ist axial und unter dauernder Federkraft gegen den Mehrkant 11B abgestützt. Aufgebracht wird die Federkraft durch ein Federelement 147, welches einerseits gegen das Haltewerkzeug 70 oder den Stab 140, und andererseits gegen die Wechselbuchse 114 abgestützt ist. Das Federelement 147 sorgt für eine dauernde axiale Vorspannkraft des Haltewerkzeugs 70, sodass es bereits nach kurzer Relativdrehung zu einem sicheren Eingriff des Haltewerkzeugs 70 an dem Mehrkant 11B kommt. Der hierfür erforderliche axiale Spielraum ist durch die Länge der Längsnut 143 gewährleistet.

Auch bei Fig. 12 ist Bestandteil des Werkzeugs 5 der Antrieb 51 zum Drehen der Wechselbuchse 114. Der Antrieb erfolgt allerdings nicht zentral auf der Längsachse, da sich dort der Stab 140 befindet. Der Antrieb 51 befindet sich vielmehr seitlich versetzt, wobei ein Getriebe 148 im Antriebsweg zwischen Antrieb 51 und Wechselbuchse 114 vorhanden ist. Bestandteil des Getriebes 148 ist ein zu der Wechselbuchse 114 drehfestes Zahnrad 149. Das Zahnrad 149 weist eine Durchgangsöffnung 150 auf, durch die hindurch sich der Stab 140 frei drehbar erstreckt.

Auch bei der Ausführungsform nach Fig. 12 kann die Steuereinheit 4 (Fig. 1) dazu ausgebildet sein, über Fahrantrieb-Steuersignale den Werkzeugträger 20 einschließlich des Schraubenspannzylinders 5 bis in eine Arbeitsposition zu fahren, in der der Schraubenspannzylinder 5 der jeweils anzuziehenden Schraubverbindung gegenüberliegt. Außerdem kann die Steuereinheit 4 dazu ausgebildet sein, über Werkzeug- Steuersignale das axiale Anziehen der Schraubverbindung und das Drehen der Mutter 12 zu kontrollieren.

Ferner kann auch bei der Ausführungsform nach Fig. 12 die Steuereinheit 4 (Fig. 1) dazu ausgebildet sein, über Haltewerkzeug-Steuersignale und einen entsprechenden Antrieb das Haltewerkzeug 70 zu kontrollieren, indem der Stab 140 mit dem daran starr angeordneten Haltewerkzeug 70 mittels des Antriebs gesteuert auf die Schraubverbindung abgesenkt und gesteuert wieder angehoben wird. Die Funktion des gesteuerten Absenkens und Anhebens des Haltewerkzeugs vermag aber auch das Federelement 147 durchzuführen.

### Bezugszeichenliste

- 1: verfahrbare Einheit
- 2: stationäre Einheit
- 3: Strang, Versorgungs- und Signalstrang
- 4: Steuereinheit
- 4A: Wegsteuermodul
- 4B: Dokumentationsmodul
- 5: Werkzeug, Schraubenspannzylinder
- 6: Wagen
- 7: Flanschverbindung
- 7A: Ringflansch
- 7B: Ringflansch
- 8A: Turmabschnitt
- 8B: Turmabschnitt
- 9: Raum

- 10: Schraubverbindung
- 11: Gewindeelement
- 11A: Gewindeendabschnitt
- 11B: Mehrkant
- 12: Mutter
- 12A: Aufstandsfläche der Mutter

- 20: Werkzeugträger
- 21A: Rolle, angetrieben
- 21B: Rolle
- 22: Rolle
- 23: Innenwand
- 24: Antriebsmotor
- 25: Kupplung
- 26: Winkelencoder
- 30: Ausrichtelement
- 30A: Ausrichtfläche
- 31: untere Plattform
- 32: obere Plattform
- 33: Gestell
- 34: Vertikalführung
- 35: Querführung
- 36: Federanordnung
- 41: Gestellbasis
- 42: Führungsstange
- 49: oberer Gestellrahmen
- 50: Gestellrahmen, höhenverstellbar
- 51: elektrischer Antrieb
- 52: elektrischer Antrieb
- 56: Gewindetrieb

- 70: Haltewerkzeug
- 75: Gegenhaltefläche
- 75A: Gegenhaltefläche
- 75B: Gegenhaltefläche
- 77: Antrieb
- 78: Werkzeuggrundkörper
- 79: Werkzeugabschnitt

- 80: Feder
- 86: Hydraulikpumpe
- 87: Hydraulikleitung
- 88: Energiemodul
- 95 96: Schwenkgestell Schieber

- 100: Zylindergehäuse
- 101: Stützrohr
- 102: Unterseite
- 110: Drehhülse
- 111: Getriebe
- 112: Hydraulikanschluss
- 113: Konus am Bolzen
- 114: Wechselbuchse
- 115: Kolben
- 116: Innengewinde
- 117: Feder
- 118: hydraulischer Arbeitsraum

- 121: Mitnehmerfläche
- 125: radial erweiterter Abschnitt
- 126: Antriebsabschnitt

- 130: Klemmbacke
- 131: Öffnung

- 140: Stab
- 141: Verdrehsicherung
- 142: Bolzen
- 143: Längsnut
- 147: Federelement
- 148: Getriebe
- 149: Zahnrad
- 150: Durchgangsöffnung

- E: Aufstandsfläche
- N: Flächennormale

## Patentansprüche

1. Vorrichtung zum Anziehen von Schraubverbindungen, die entlang einer einen Raum und vorzugsweise das Innere des Turms einer Windkraftanlage in Ringform umgebenden Flanschverbindung (7) angeordnet sind und von denen sich jede Schraubverbindung (10) aus einem Gewindeelement (11) und einer darauf aufgeschraubten Mutter (12) zusammensetzt, und die Mutter (12) gegen die erste Seite, und das Gewindeelement (11) gegen die zweite Seite der Flanschverbindung abgestützt ist, wobei die Vorrichtung aufweist
- einen mittels eines Fahrantriebs entlang der Flanschverbindung (7) fahrbaren, mit einem vorzugsweise elektrischen Fahrantrieb versehenen Werkzeugträger (20),
- ein an dem Werkzeugträger (20) angeordnetes Werkzeug (5) zum Anziehen der Schraubverbindung und Drehen der Mutter relativ zu der Flanschverbindung,
- eine Steuereinheit (4) welche dazu ausgebildet ist, über Fahrantrieb-Steuersignale den Werkzeugträger (20) bis in eine Arbeitsposition zu fahren, in der das Werkzeug (5) der jeweils anzuziehenden Schraubverbindung gegenüberliegt, und über Werkzeug-Steuersignale das Anziehen der Schraubverbindung und Drehen der Mutter zu kontrollieren,
wobei an dem Werkzeugträger (20) zusätzlich zu dem Werkzeug (5) ein Haltewerkzeug (70) mit mindestens einer gegen das Gewindeelement (11) anlegbaren Gegenhaltefläche (75) angeordnet ist, wobei der Werkzeugträger (20) mit einem Antrieb (77) für ein Vor- und Zurückbewegen des Haltewerkzeugs (70) zwischen einer Ruheposition und einer Gegenhalteposition versehen ist, in welcher die Gegenhaltefläche (75) zur Anlage an dem Gewindeelement (11) gelangt, wobei die Steuereinheit (4) zusätzlich dazu ausgebildet ist, über Haltewerkzeug-Steuersignale den Antrieb (77) des Haltewerkzeugs (70) zu kontrollieren, wobei zum Anziehen von Schraubenverbindungen, deren Gewindeelement (11) auf der zweiten Seite der Flanschverbindung (7) mit mindestens einer flachen Schlüsselfläche versehen ist, die Gegenhaltefläche (75) zur flächigen Anlage gegen die Schlüsselfläche ausgebildet ist, und wobei das Haltewerkzeug (70) einen mit dem Antrieb (77) antriebsseitig verbundenen Werkzeuggrundkörper (78) und einen die mindestens eine Gegenhaltefläche (75) aufweisenden Werkzeugabschnitt (79) umfasst, **dadurch gekennzeichnet, dass** der Werkzeugabschnitt (79) entgegen der Kraft einer Feder (80) beweglich an dem Werkzeuggrundkörper (78) geführt ist, wobei die Bewegungsrichtung gleich ist der Richtung des Vor- und Zurückbewegens des Haltewerkzeugs (70).

2. Vorrichtung nach Anspruch 1, **dadurch gekennzeichnet, dass** das Haltewerkzeug (70) zwei einander zugewandte und zueinander parallele Gegenhalteflächen (75) aufweist.

3. Vorrichtung nach Anspruch 2, **dadurch gekennzeichnet, dass** die zwei Gegenhalteflächen (75) die Werkzeugflächen eines Maulschlüssels sind.

4. Vorrichtung nach Anspruch 1, **dadurch gekennzeichnet, dass** das Haltewerkzeug (70) zwei einander abgewandte, vorzugsweise zueinander parallele Gegenhalteflächen aufweist.

5. Vorrichtung nach Anspruch 1, **dadurch gekennzeichnet, dass** an dem Haltewerkzeug (70) mehrere, gemeinsam einen Mehrkant-Ringschlüssel bildende Gegenhalteflächen ausgebildet sind.

6. Vorrichtung nach einem der Ansprüche 1 bis 4, **dadurch gekennzeichnet, dass** sich die Antriebsrichtung des Antriebs (77) des Haltewerkzeugs (70) quer zur Längsachse der Schraubverbindung (10) erstreckt.

7. Vorrichtung nach einem der Ansprüche 1 bis 5, **dadurch gekennzeichnet, dass** sich die Antriebsrichtung des Antriebs (77) des Haltewerkzeugs (70) parallel zur Längsachse der Schraubverbindung (10) erstreckt.

8. Vorrichtung nach einem der vorangehenden Ansprüche, **dadurch gekennzeichnet, dass** der Werkzeugträger (20) zu seiner Verfahrbarkeit mit drehbar gelagerten Laufrollen (21A, 21B) versehen ist, welche die Aufstandsebene (E) des Werkzeugträgers (20) definieren, dass der Antrieb (77) für das Haltewerkzeug (70) oberhalb der Aufstandsebene (E) angeordnet ist, und dass sich der Werkzeuggrundkörper (78) des Haltewerkzeugs über die Aufstandsebene (E) hinweg bis hinab zu dem Werkzeugabschnitt (79) erstreckt.

9. Vorrichtung nach einem der vorangehenden Ansprüche, **dadurch gekennzeichnet, dass** sich der Werkzeugabschnitt (79) in der Ruheposition des Haltewerkzeugs (70) in einer Stellung an dem Werkzeuggrundkörper (78) befindet, in der sich ein Anschlag an dem Werkzeugabschnitt (79) unter der Kraft der Feder (80) gegen einen Anschlag an dem Werkzeuggrundkörper (78) abstützt.

10. Vorrichtung nach einem der vorangehenden Ansprüche, **dadurch gekennzeichnet, dass** der Antrieb (77) zum Vor- und Zurückbewegen des Haltewerkzeugs (70) als Zahnstangenantrieb ausgebildet ist.

11. Vorrichtung nach einem der vorangehenden Ansprüche **dadurch gekennzeichnet, dass** der Fahrantrieb des Werkzeugträgers (20) und der Antrieb (77) des Haltewerkzeugs (70) jeweils eigenständig sind, aber beide durch Signale derselben Steuereinheit (4) kontrolliert werden.

12. Vorrichtung nach einem der vorangehenden Ansprüche, **gekennzeichnet durch** ein räumlich getrennt von dem Werkzeugträger (20) platzierbares Energiemodul (88) zur Energieversorgung des Fahrantriebs, des Werkzeugs (5) und des Haltewerkzeugs (70), wobei eine zumindest auf einer Teillänge flexible Energieversorgungsleitung von dem Energiemodul (88) zu dem Werkzeugträger (20) führt.

13. Vorrichtung nach Anspruch 12, **dadurch gekennzeichnet, dass** die Steuereinheit (4) an dem Energiemodul (88) angeordnet oder mit diesem gemeinsam auf einem Träger angeordnet ist, dass zur Übertragung der Fahrantrieb-Steuersignale, der Werkzeug-Steuersignale und der Haltewerkzeug-Steuersignale eine elektrische Signalleitung von der Steuereinheit (4) zu dem Werkzeugträger (20) führt, und dass die Signalleitung zumindest auf einer Teillänge mit der Energieversorgungsleitung mechanisch verbunden ist.

14. Vorrichtung nach Anspruch 12 oder 13, **dadurch gekennzeichnet, dass** diese ferner ein schwenkbewegliches Gestell (95) mit einer oder mehreren senkrechten Schwenkachsen aufweist, dass das Gestell (95) zu seiner Befestigung mit Befestigungsmitteln versehen ist, und dass ein Längsabschnitt der Energieversorgungsleitung in das Gestell (95) eingehängt ist.

15. Vorrichtung nach Anspruch 14, **dadurch gekennzeichnet, dass** das schwenkbewegliche Gestell (95) ausgebildet ist, die Energieversorgungsleitung über einen Drehwinkel von mindestens annähernd 360° zu stützen.

16. Vorrichtung nach einem der Ansprüche 12 bis 15, **dadurch gekennzeichnet, dass** der Werkzeugträger (20) eine Hindurchführung für die Energieversorgungsleitung aufweist und sich die Hindurchführung an einem Schieber (96) befindet, welcher beweglich an dem Werkzeugträger (20) angeordnet ist, vorzugsweise in Fahrtrichtung des Werkzeugträgers (20) beweglich.

17. Vorrichtung zum Anziehen von Schraubverbindungen, die entlang einer einen Raum und vorzugsweise das Innere des Turms einer Windkraftanlage in Ringform umgebenden Flanschverbindung (7) angeordnet sind und von denen sich jede Schraubverbindung (10) aus einem Gewindeelement (11) und einer darauf aufgeschraubten Mutter (12) zusammensetzt, und die Mutter (12) gegen die erste Seite, und das Gewindeelement (11) gegen die zweite Seite der Flanschverbindung abgestützt ist, wobei die Vorrichtung aufweist
- einen mittels eines Fahrantriebs entlang der Flanschverbindung (7) fahrbaren, mit einem vorzugsweise elektrischen Fahrantrieb versehenen Werkzeugträger (20),
- ein an dem Werkzeugträger (20) angeordnetes Werkzeug (5) zum Anziehen der Schraubverbindung und Drehen der Mutter relativ zu der Flanschverbindung,
- eine Steuereinheit (4) welche dazu ausgebildet ist, über Fahrantrieb-Steuersignale den Werkzeugträger (20) bis in eine Arbeitsposition zu fahren, in der das Werkzeug (5) der jeweils anzuziehenden Schraubverbindung gegenüberliegt, und über Werkzeug-Steuersignale das Anziehen der Schraubverbindung und Drehen der Mutter zu kontrollieren,
wobei an dem Werkzeugträger (20) zusätzlich zu dem Werkzeug (5) ein Haltewerkzeug (70) mit mindestens einer gegen das Gewindeelement (11) anlegbaren Gegenhaltefläche (75A, 75B) angeordnet ist, wobei der Werkzeugträger (20) mit einem Antrieb für ein Vor- und Zurückbewegen des Haltewerkzeugs (70) zwischen einer Ruheposition und einer Gegenhalteposition versehen ist, in welcher die Gegenhaltefläche (75A, 75B) zur Anlage an dem Gewindeelement (11) gelangt, wobei die Steuereinheit (4) zusätzlich dazu ausgebildet ist, über Haltewerkzeug-Steuersignale den Antrieb des Haltewerkzeugs (70) zu kontrollieren, **dadurch gekennzeichnet, dass** das Haltewerkzeug (70) zwei unter Druckausübung aufeinander zu bewegliche Gegenhalteflächen (75A, 75B) aufweist, und dass die Gegenhalteflächen (75A, 75B) jeweils als Schalen gestaltet sind, deren Radius im Wesentlichen gleich ist dem Radius eines Gewindeabschnitts des Gewindeelements (11).

18. Vorrichtung nach Anspruch 17, **dadurch gekennzeichnet, dass** die Gegenhalteflächen (75A, 75B) zur Erhöhung ihres Reibungswiderstandes gegenüber dem Gewindeabschnitt mit einem Reibbelag aus z. B. Gummi oder mit einer nichtglatten Oberfläche versehen sind.

19. Vorrichtung nach Anspruch 17 oder 18, **dadurch gekennzeichnet, dass** sich das Haltewerkzeug (70) durch mindestens eine Öffnung (131) in dem Werkzeug (5) erstreckt, wobei sich die Gegenhalteflächen (75A, 75B) des Haltewerkzeugs (70) innerhalb des Werkzeugs (5) befinden.

20. Vorrichtung nach einem der Anspruch 19, **dadurch gekennzeichnet, dass** Bestandteil des Werkzeugs (5) ein Stützrohr (101) ist, mit dessen Unterseite (102) sich das Werkzeug (5) auf der Flanschverbindung abzustützen vermag, dass sich die mindestens eine Öffnung (131), durch welche sich das Haltewerkzeug (70) erstreckt, in dem Stützrohr (101) befindet, und dass die Öffnung (131) durchgehend bis zu der Unterseite (102) reicht.

21. Vorrichtung zum Anziehen von Schraubverbindungen, die entlang einer einen Raum und vorzugsweise das Innere des Turms einer Windkraftanlage in Ringform umgebenden Flanschverbindung (7) angeordnet sind und von denen sich jede Schraubverbindung (10) aus einem Gewindeelement (11) und einer darauf aufgeschraubten Mutter (12) zusammensetzt, und die Mutter (12) gegen die erste Seite, und das Gewindeelement (11) gegen die zweite Seite der Flanschverbindung abgestützt ist, wobei die Vorrichtung aufweist
- einen mittels eines Fahrantriebs entlang der Flanschverbindung (7) fahrbaren, mit einem vorzugsweise elektrischen Fahrantrieb versehenen Werkzeugträger (20),
- ein an dem Werkzeugträger (20) angeordnetes Werkzeug (5) zum Anziehen der Schraubverbindung und Drehen der Mutter relativ zu der Flanschverbindung,
- eine Steuereinheit (4) welche dazu ausgebildet ist, über Fahrantrieb-Steuersignale den Werkzeugträger (20) bis in eine Arbeitsposition zu fahren, in der das Werkzeug (5) der jeweils anzuziehenden Schraubverbindung gegenüberliegt, und über Werkzeug-Steuersignale das Anziehen der Schraubverbindung und Drehen der Mutter zu kontrollieren,
**dadurch gekennzeichnet, dass** das Werkzeug (5) ein hydraulischer Schraubenspannzylinder ist, mit einem einen hydraulischen Arbeitsraum (118) umgebenden Zylindergehäuse (100), einer in dem Zylindergehäuse (100) drehbar angeordneten und mit einem Innengewinde (116) auf das Gewindeelement (11) aufschraubbaren Wechselbuchse (114), einem Antrieb (51) zum Drehen der Wechselbuchse (114), und einem gegen einen an dem Gewindeelement (11) angeformten Mehrkant (11B) abstützbaren Haltewerkzeug (70), wobei das Haltewerkzeug (70) innerhalb des Zylindergehäuses (100) längsgeführt und gegenüber dem Zylindergehäuse (100) drehfest ist.

22. Vorrichtung nach Anspruch 21, **dadurch gekennzeichnet, dass** das Haltewerkzeug (70) unter Federkraft gegen die Schlüsselfläche abgestützt ist.

23. Vorrichtung nach Anspruch 22, **gekennzeichnet durch** ein Federelement (147), welches einerseits gegen das Haltewerkzeug (70) und andererseits gegen die Wechselbuchse (114) abgestützt ist.

24. Vorrichtung nach einem der Ansprüche 21 - 23, **gekennzeichnet durch** einen in Längsrichtung durch die Wechselbuchse (114) hindurchgeführten und relativ zu der Wechselbuchse (114) drehbaren Stab (140), der an seinem einen Ende mit dem Haltewerkzeug (70) und im Bereich seines anderen Endes mit einer Verdrehsicherung (141) versehen ist, welche den Stab (140) drehfest relativ zu dem Zylindergehäuse (100) hält.

25. Vorrichtung nach einem der Ansprüche 21 - 24, **gekennzeichnet durch** ein Getriebe (148) im Antriebsweg zwischen dem Antrieb (51) und der Wechselbuchse (114), wobei Bestandteil des Getriebes (141) ein zu der Wechselbuchse (114) drehfestes Zahnrad (149) ist, und das Zahnrad (149) mit einer Durchgangsöffnung (150) versehen ist, durch die sich der Stab (140) erstreckt.

26. Vorrichtung nach einem der Ansprüche 21 - 25, **dadurch gekennzeichnet, dass** Bestandteil des Werkzeugs (5) eine drehbar in dem Zylindergehäuse (100) angeordnete Drehhülse (110) zum Drehen der Mutter (12) ist.

## Claims

1. Device for tightening screw connections which are arranged along a flange connection (7) which surrounds, in ring-shaped form, a space and preferably the interior of the tower of a wind turbine, and of which each screw connection (10) is made up of a threaded element (11) and a nut (12) screwed onto said threaded element, and the nut (12) is supported against the first side, and the threaded element (11) is supported against the second side, of the flange connection, wherein the device has:
- a tool carrier (20) which is movable along the flange connection (7) and which is equipped with a preferably electric traction drive,
- a tool (5) which is arranged on the tool carrier (20) and which serves for tightening the screw connection and rotating the nut relative to the flange connection,
- a control unit (4) which is designed to, by means of traction drive control signals, move the tool carrier (20) into a working position in which the tool (5) is situated opposite the screw connection that is respectively to be tightened, and to control the tightening of the screw connection and rotation of the nut by means of tool control signals,
wherein, on the tool carrier (20), in addition to the tool (5), there is arranged a holding tool (70) with at least one counter-holding surface (75) which can be caused to bear against the threaded element (11), wherein the tool carrier (20) is equipped with a drive (77) for a forwards and backwards movement of the holding tool (70) between a rest position and a counter-holding position in which the counter-holding surface (75) comes to bear against the threaded element (11), wherein the control unit (4) is additionally designed to, by means of holding tool control signals, control the drive (77) of the holding tool (70), wherein, for the tightening of screw connections, the threaded element (11) of which is equipped, on the second side of the flange connection (7), with at least one flat, the counter-holding surface (75) is designed to abut areally against the flat, and wherein the holding tool (70) comprises a tool main body (78), which is connected at a drive side to the drive (77), and a tool portion (79), which has the at least one counter-holding surface (75), **characterized in that** the tool portion (79) is guided movably, counter to the force of a spring (80), on the tool main body (78), wherein the movement direction is identical to the direction of the forwards and backwards movement of the holding tool (70).

2. Device according to Claim 1, **characterized in that** the holding tool (70) has two mutually parallel counter-holding surfaces (75) which face towards one another.

3. Device according to Claim 2, **characterized in that** the two counter-holding surfaces (75) are the tool surfaces of an open-ended spanner.

4. Device according to Claim 1, **characterized in that** the holding tool (70) has two preferably mutually parallel counter-holding surfaces which face away from one another.

5. Device according to Claim 1, **characterized in that** multiple counter-holding surfaces which together form a polygonal ring spanner are formed on the holding tool (70).

6. Device according to any of Claims 1 to 4, **characterized in that** the drive direction of the drive (77) of the holding tool (70) extends transversely with respect to the longitudinal axis of the screw connection (10).

7. Device according to any of Claims 1 to 5, **characterized in that** the drive direction of the drive (77) of the holding tool (70) extends parallel to the longitudinal axis of the screw connection (10) .

8. Device according to any of the preceding claims, **characterized in that** the tool carrier (20) is, for the mobility thereof, equipped with rotatably mounted rollers (21A, 21B) which define the standing plane (E) of the tool carrier (20), **in that** the drive (77) for the holding tool (70) is arranged above the standing plane (E), and **in that** the tool main body (78) of the holding tool extends down beyond the standing plane (E) to the tool portion (79) .

9. Device according to any of the preceding claims, **characterized in that** the tool portion (79) is, in the rest position of the holding tool (70), situated in a position on the tool main body (78) in which a stop on the tool portion (79) is supported, under the force of the spring (80), against a stop on the tool main body (78).

10. Device according to any of the preceding claims, **characterized in that** the drive (77) for the forwards and backwards movement of the holding tool (70) is in the form of a toothed-rack drive.

11. Device according to any of the preceding claims, **characterized in that** the traction drive of the tool holder (20) and the drive (77) of the holding tool (70) are each independent but are both controlled by signals from the same control unit (4).

12. Device according to any of the preceding claims, **characterized by** an energy module (88) which can be positioned spatially separately from the tool carrier (20) and which serves for supplying energy to the traction drive, to the tool (5) and to the holding tool (70), wherein an energy supply line which is flexible at least over a part of its length leads from the energy module (88) to the tool carrier (20) .

13. Device according to Claim 12, **characterized in that** the control unit (4) is arranged on the energy module (88) or is arranged together with the latter on a carrier, **in that**, for the transmission of the traction drive control signals, of the tool control signals and of the holding tool control signals, an electrical signal line leads from the control unit (4) to the tool carrier (20), and **in that** the signal line is mechanically connected, at least over a part of its length, to the energy supply line.

14. Device according to Claim 12 or 13, **characterized in that** said device furthermore has a pivotable stand (95) with one or more vertical pivot axes, **in that** the stand (95) is equipped with fastening means for the fastening thereof, and **in that** a longitudinal portion of the energy supply line is mounted into the stand (95).

15. Device according to Claim 14, **characterized in that** the pivotable stand (95) is designed to support the energy supply line over an angle of rotation of at least approximately 360°.

16. Device according to any of Claims 12 to 15, **characterized in that** the tool carrier (20) has a leadthrough for the energy supply line, and the leadthrough is situated on a slide (96) which is arranged movably on the tool carrier (20), preferably in a direction of travel of the tool carrier (20).

17. Device for tightening screw connections which are arranged along a flange connection (7) which surrounds, in ring-shaped form, a space and preferably the interior of the tower of a wind turbine, and of which each screw connection (10) is made up of a threaded element (11) and a nut (12) screwed onto said threaded element, and the nut (12) is supported against the first side, and the threaded element (11) is supported against the second side, of the flange connection, wherein the device has:
- a tool carrier (20) which is movable along the flange connection (7) and which is equipped with a preferably electric traction drive,
- a tool (5) which is arranged on the tool carrier (20) and which serves for tightening the screw connection and rotating the nut relative to the flange connection,
- a control unit (4) which is designed to, by means of traction drive control signals, move the tool carrier (20) into a working position in which the tool (5) is situated opposite the screw connection that is respectively to be tightened, and to control the tightening of the screw connection and rotation of the nut by means of tool control signals,
wherein, on the tool carrier (20), in addition to the tool (5), there is arranged a holding tool (70) with at least one counter-holding surface (75A, 75B) which can be caused to bear against the threaded element (11), wherein the tool carrier (20) is equipped with a drive for a forwards and backwards movement of the holding tool (70) between a rest position and a counter-holding position in which the counter-holding surface (75A, 75B) comes to bear against the threaded element (11), wherein the control unit (4) is additionally designed to, by means of holding tool control signals, control the drive of the holding tool (70), **characterized in that** the holding tool (70) has two counter-holding surfaces (75A, 75B) which are movable towards one another under exertion of pressure, and **in that** the counter-holding surfaces (75A, 75B) are each configured as shells, the radius of which is substantially equal to the radius of a threaded portion of the threaded element (11).

18. Device according to Claim 17, **characterized in that** the counter-holding surfaces (75A, 75B) are, in order to increase their friction resistance relative to the threaded portion, equipped with a friction lining composed for example of rubber or with a nonsmooth surface.

19. Device according to Claim 17 or 18, **characterized in that** the holding tool (70) extends through at least one opening (131) in the tool (5), wherein the counter-holding surfaces (75A, 75B) of the holding tool (70) are situated within the tool (5).

20. Device according to Claim 19, **characterized in that** a constituent part of the tool (5) is a support tube (101), by means of the bottom side (102) of which the tool (5) can be supported on the flange connection, **in that** the at least one opening (131) through which the holding tool (70) extends is situated in the support tube (101), and **in that** the opening (131) extends continuously to the bottom side (102).

21. Device for tightening screw connections which are arranged along a flange connection (7) which surrounds, in ring-shaped form, a space and preferably the interior of the tower of a wind turbine, and of which each screw connection (10) is made up of a threaded element (11) and a nut (12) screwed onto said threaded element, and the nut (12) is supported against the first side, and the threaded element (11) is supported against the second side, of the flange connection, wherein the device has:
- a tool carrier (20) which is movable along the flange connection (7) and which is equipped with a preferably electric traction drive,
- a tool (5) which is arranged on the tool carrier (20) and which serves for tightening the screw connection and rotating the nut relative to the flange connection,
- a control unit (4) which is designed to, by means of traction drive control signals, move the tool carrier (20) into a working position in which the tool (5) is situated opposite the screw connection that is respectively to be tightened, and to control the tightening of the screw connection and rotation of the nut by means of tool control signals,
**characterized in that** the tool (5) is a hydraulic screw-tensioning cylinder, having a cylinder housing (100) which surrounds a hydraulic working chamber (118), having an exchangeable socket (114) which is arranged rotatably in the cylinder housing (100) and which can be screwed by way of an internal thread (116) onto the threaded element (11), having a drive (51) for rotating the exchangeable socket (114), and having a holding tool (70) which can be supported against a polygon (11B) integrally formed on the threaded element (11), wherein the holding tool (70) is guided longitudinally within the cylinder housing (100) and is rotationally fixed relative to the cylinder housing (100).

22. Device according to Claim 21, **characterized in that** the holding tool (70) is supported under spring force against the flat.

23. Device according to Claim 22, **characterized by** a spring element (147) which is supported at one side against the holding tool (70) and at the other side against the exchangeable socket (114).

24. Device according to any of Claims 21 - 23, **characterized by** a rod (140) which is led through the exchangeable socket (114) and which is rotatable relative to the exchangeable socket (114) and which, at one end thereof, is equipped with the holding tool (70) and, in the region of the other end thereof, is equipped with a rotation-preventing securing means (141) which holds the rod (140) rotationally fixed relative to the cylinder housing (100) .

25. Device according to any of Claims 21 - 24, **characterized by** a gearing (148) in the drive path between the drive (51) and the exchangeable socket (114), wherein a constituent part of the gearing (141) is a toothed gear (149) which is rotationally fixed relative to the exchangeable socket (114), and the toothed gear (149) is equipped with a passage opening (150) through which the rod (140) extends.

26. Device according to any of Claims 21 - 25, **characterized in that** a constituent part of the tool (5) is a rotary sleeve (110) which is arranged rotatably in the cylinder housing (100) and which serves for rotating the nut (12).

## Revendications

1. Dispositif pour serrer des raccords vissés qui sont disposés le long d'un raccord à bride (7) entourant sous forme annulaire un espace, et de préférence l'intérieur de la tour d'une éolienne, et dont chaque raccord vissé (10) se compose d'un élément fileté (11) et d'un écrou (12) vissé sur celui-ci, l'écrou (12) étant supporté contre le premier côté du raccord à bride et l'élément fileté (11) étant supporté contre le deuxième côté du raccord à bride, le dispositif présentant :
- un porte-outil (20) déplaçable au moyen d'un entraînement de conduite le long du raccord à bride (7), muni d'un entraînement de conduite, de préférence électrique,
- un outil (5) disposé sur le porte-outil (20), pour serrer le raccord vissé et faire tourner l'écrou par rapport au raccord à bride,
- une unité de commande (4) qui est réalisée pour déplacer le porte-outil (20) par le biais de signaux de commande d'entraînement de conduite jusque dans une position de travail dans laquelle l'outil (5) est opposé au raccord vissé particulier à serrer, et pour contrôler, par le biais de signaux de commande d'outil, le serrage du raccord vissé et la rotation de l'écrou,
dans lequel un outil de maintien (70) comprenant au moins une surface de contre-maintien (75) pouvant être appliquée contre l'élément fileté (11), est disposé en plus de l'outil (5) sur le porte-outil (20), le porte-outil (20) étant pourvu d'un entraînement (77) pour un déplacement d'avance et de retour de l'outil de maintien (70) entre une position de repos et une position de maintien conjugée dans laquelle la surface de contre-maintien (75) parvient en appui contre l'élément fileté (11), l'unité de commande (4) étant en outre réalisée pour contrôler l'entraînement (77) de l'outil de maintien (70) par le biais de signaux de commande d'outil de maintien, la surface de contre-maintien (75) étant réalisée pour s'appliquer à plat contre une surface de clé, pour serrer des raccords vissés dont l'élément fileté (11) est muni d'au moins une surface de clé plate sur le deuxième côté du raccord à bride (7), et l'outil de maintien (70) comprenant un corps de base d'outil (78) connecté à l'entraînement (77) du côté de l'entraînement et une portion d'outil (79) présentant l'au moins une surface de contre-maintien (75), **caractérisé en ce que** la portion d'outil (79) est guidée à l'encontre de la force d'un ressort (80) de manière déplaçable au niveau du corps de base d'outil (78), la direction de déplacement étant identique à la direction du déplacement d'avance et de retour de l'outil de maintien (70).

2. Dispositif selon la revendication 1, **caractérisé en ce que** l'outil de maintien (70) présente deux surfaces de contre-maintien (75) tournées l'une vers l'autre et parallèles l'une à l'autre.

3. Dispositif selon la revendication 2, **caractérisé en ce que** les deux surfaces de contre-maintien (75) sont les surfaces d'outil d'une clé plate.

4. Dispositif selon la revendication 1, **caractérisé en ce que** l'outil de maintien (70) présente deux surfaces de contre-maintien opposées l'une à l'autre, de préférence parallèles l'une à l'autre.

5. Dispositif selon la revendication 1, **caractérisé en ce que** plusieurs surfaces de contre-maintien formant ensemble une clé à douille polygonale sont disposées sur l'outil de maintien (70).

6. Dispositif selon l'une quelconque des revendications 1 à 4, **caractérisé en ce que** la direction d'entraînement de l'entraînement (77) de l'outil de maintien (70) est transversale à l'axe longitudinal du raccord vissé (10).

7. Dispositif selon l'une quelconque des revendications 1 à 5, **caractérisé en ce que** la direction d'entraînement de l'entraînement (77) de l'outil de maintien (70) est parallèle à l'axe longitudinal du raccord vissé (10).

8. Dispositif selon l'une quelconque des revendications précédentes, **caractérisé en ce que** le porte-outil (20), pour faciliter son déplacement, est muni de galets de roulement supportés à rotation (21A, 21B), lesquels définissent le plan d'appui (E) du porte-outil (20), **en ce que** l'entraînement (77) pour l'outil de maintien (70) est disposé au-dessus du plan d'appui (E), et **en ce que** le corps de base d'outil (78) de l'outil de maintien s'étend au-delà du plan d'appui (E) vers le bas jusqu'à la portion d'outil (79).

9. Dispositif selon l'une quelconque des revendications précédentes, **caractérisé en ce que** la portion d'outil (79), dans la position de repos de l'outil de maintien (70), se trouve dans une position au niveau du corps de base d'outil (78) dans laquelle une butée au niveau de la portion d'outil (79) s'appuie sous l'effet de la force du ressort (80) contre une butée au niveau du corps de base d'outil (78).

10. Dispositif selon l'une quelconque des revendications précédentes, **caractérisé en ce que** l'entraînement (77) pour le déplacement d'avant en arrière de l'outil de maintien (70) est réalisé sous forme d'entraînement à crémaillère.

11. Dispositif selon l'une quelconque des revendications précédentes, **caractérisé en ce que** l'entraînement de conduite du porte-outil (20) et l'entraînement (77) de l'outil de maintien (70) sont dans chaque cas autonomes, mais tous les deux sont contrôlés par des signaux de la même unité de commande (4).

12. Dispositif selon l'une quelconque des revendications précédentes, **caractérisé par** un module de puissance (88) pouvant être placé de manière séparée physiquement du porte-outil (20) pour alimenter en puissance l'entraînement de conduite, l'outil (5) et l'outil de maintien (70), une ligne d'alimentation en puissance flexible au moins sur une longueur partielle conduisant du module de puissance (88) au porte-outil (20).

13. Dispositif selon la revendication 12, **caractérisé en ce que** l'unité de commande (4) est disposée au niveau du module de puissance (88) ou est disposée ensemble conjointement avec celui-ci sur un support, **en ce que** pour le transfert des signaux de commande d'entraînement de conduite, des signaux de commande d'outil et des signaux de commande d'outil de maintien, une ligne de signaux électrique conduit de l'unité de commande (4) au porte-outil (20) et **en ce que** la ligne de signaux est connectée mécaniquement au moins sur une longueur partielle à la ligne d'alimentation en puissance.

14. Dispositif selon la revendication 12 ou 13, **caractérisé en ce que** celui-ci présente en outre un châssis pivotant (95) avec un ou plusieurs axes de pivotement verticaux, **en ce que** le châssis (95) est muni pour sa fixation de moyens de fixation et **en ce qu'**une portion longitudinale de la ligne d'alimentation en puissance est accrochée dans le châssis (95).

15. Dispositif selon la revendication 14, **caractérisé en ce que** le châssis pivotant (95) est réalisé pour supporter la ligne d'alimentation en puissance sur un angle de rotation d'au moins approximativement 360°.

16. Dispositif selon l'une quelconque des revendications 12 à 15, **caractérisé en ce que** le porte-outil (20) présente un passage pour la ligne d'alimentation en puissance et le passage se trouve au niveau d'un coulisseau (96) qui est disposé de manière déplaçable sur le porte-outil (20), de préférence de manière déplaçable dans la direction de conduite du porte-outil (20).

17. Dispositif pour serrer des raccords vissés qui sont disposés le long d'un raccord à bride (7) entourant sous forme annulaire un espace, et de préférence, l'intérieur de la tour d'une éolienne, et dont chaque raccord vissé (10) se compose d'un élément fileté (11) et d'un écrou (12) vissé sur celui-ci, l'écrou (12) étant supporté contre le premier côté du raccord à bride et l'élément fileté (11) étant supporté contre le deuxième côté du raccord à bride, le dispositif présentant :
- un porte-outil (20) déplaçable au moyen d'un entraînement de conduite le long du raccord à bride (7), muni d'un entraînement de conduite, de préférence électrique,
- un outil (5) disposé sur le porte-outil (20), pour serrer le raccord vissé et faire tourner l'écrou par rapport au raccord à bride,
- une unité de commande (4) qui est réalisée pour déplacer le porte-outil (20) par le biais de signaux de commande d'entraînement de conduite jusque dans une position de travail dans laquelle l'outil (5) est opposé au raccord vissé particulier à serrer, et pour contrôler, par le biais de signaux de commande d'outil, le serrage du raccord vissé et la rotation de l'écrou,
dans lequel un outil de maintien (70) comprenant au moins une surface de contre-maintien (75A, 75B) pouvant être appliquée contre l'élément fileté (11), est disposé en plus de l'outil (5) sur le porte-outil (20), le porte-outil (20) étant muni d'un entraînement pour un déplacement d'avance et de retour de l'outil de maintien (70) entre une position de repos et une position de maintien conjuguée dans laquelle la surface de contre-maintien (75A, 75B) parvient en appui contre l'élément fileté (11), l'unité de commande (4) étant en outre réalisée pour contrôler l'entraînement de l'outil de maintien (70) par le biais de signaux de commande d'outil de maintien, **caractérisé en ce que** l'outil de maintien (70) présente deux surfaces de contre-maintien (75A, 75B) déplaçables l'une vers l'autre en exerçant une pression, et **en ce que** les surfaces de contre-maintien (75A, 75B) sont réalisées à chaque fois sous forme de coque dont le rayon est essentiellement égal au rayon d'une portion filetée de l'élément fileté (11).

18. Dispositif selon la revendication 17, **caractérisé en ce que** les surfaces de contre-maintien (75A, 75B) sont pourvues d'un revêtement de friction constitué par exemple de caoutchouc ou d'une surface non lisse pour augmenter la résistance de friction par rapport à la portion filetée.

19. Dispositif selon la revendication 17 ou 18, **caractérisé en ce que** l'outil de maintien (70) s'étend à travers au moins une ouverture (131) dans l'outil (5), les surfaces de contre-maintien (75A, 75B) de l'outil de maintien (70) se trouvant à l'intérieur de l'outil (5).

20. Dispositif selon la revendication 19, **caractérisé en ce qu'**un tube de support (101) fait partie de l'outil (5), son côté inférieur (102) permettant à l'outil (5) de s'appuyer contre le raccord à bride, **en ce que** l'au moins une ouverture (131) à travers laquelle s'étend l'outil de maintien (70) se trouve dans le tube de support (101) et **en ce que** l'ouverture (131) s'étend en continu jusqu'au côté inférieur (102).

21. Dispositif pour serrer des raccords vissés qui sont disposés le long d'un raccord à bride (7) entourant sous forme annulaire un espace, et de préférence, l'intérieur de la tour d'une éolienne, et dont chaque raccord vissé (10) se compose d'un élément fileté (11) et d'un écrou (12) vissé sur celui-ci, l'écrou (12) étant supporté contre le premier côté du raccord à bride et l'élément fileté (11) étant supporté contre le deuxième côté du raccord à bride, le dispositif présentant :
- un porte-outil (20) déplaçable au moyen d'un entraînement de conduite le long du raccord à bride (7), muni d'un entraînement de conduite, de préférence électrique,
- un outil (5) disposé sur le porte-outil (20), pour serrer le raccord vissé et faire tourner l'écrou par rapport au raccord à bride,
- une unité de commande (4) qui est réalisée pour déplacer le porte-outil (20) par le biais de signaux de commande d'entraînement de conduite jusque dans une position de travail dans laquelle l'outil (5) est opposé au raccord vissé particulier à serrer, et pour contrôler, par le biais de signaux de commande d'outil, le serrage du raccord vissé et la rotation de l'écrou,
**caractérisé en ce que** l'outil (5) est un cylindre de serrage de vis hydraulique avec un logement de cylindre (100) entourant un espace de travail hydraulique (118), une douille remplaçable (114) disposée de manière rotative dans le logement de cylindre (100) et pouvant être vissée avec un filetage intérieur (116) sur l'élément fileté (11), un entraînement (51) pour faire tourner la douille remplaçable (114), et un outil de maintien (70) pouvant s'appuyer contre un profil polygonal (11B) formé sur l'élément fileté (11), l'outil de maintien (70) étant guidé longitudinalement à l'intérieur du logement de cylindre (100) et étant solidaire en rotation par rapport au logement de cylindre (100).

22. Dispositif selon la revendication 21, **caractérisé en ce que** l'outil de maintien (70) est supporté sous l'effet d'une force de ressort contre la surface de clé.

23. Dispositif selon la revendication 22, **caractérisé par** un élément de ressort (147) qui est supporté d'une part contre l'outil de maintien (70) et d'autre part contre la douille remplaçable (114).

24. Dispositif selon l'une quelconque des revendications 21 à 23, **caractérisé par** une barre (140) guidée dans la direction longitudinale à travers la douille remplaçable (114) et pouvant tourner par rapport à la douille remplaçable (114), qui est munie au niveau de l'une de ses extrémités de l'outil de maintien (70) et, dans la région de son autre extrémité, d'une fixation antirotation (141) qui retient la barre (140) de manière solidaire en rotation par rapport au logement de cylindre (100).

25. Dispositif selon l'une quelconque des revendications 21 à 24, **caractérisé par** une transmission (148) dans la trajectoire d'entraînement entre l'entraînement (51) et la douille remplaçable (114), une roue dentée (149) solidaire en rotation par rapport à la douille remplaçable (114) faisant partie de la transmission (141) et la roue dentée (149) étant pourvue d'une ouverture de passage (150) à travers laquelle s'étend la barre (140).

26. Dispositif selon l'une quelconque des revendications 21 à 25, **caractérisé en ce qu'**un manchon rotatif (110) pour faire tourner l'écrou (12), disposé de manière rotative dans le logement de cylindre (100), fait partie de l'outil (5).
